# EUROPÄISCHE PATENTANMELDUNG

(11) **EP 3 968 073 A1**
(43) Veröffentlichungstag der Anmeldung: **16.03.2022**
(21) Anmeldenummer: 21196960.5
(22) Anmeldetag: 15.09.2021
(51) Int. Cl.: G02B 6/44

(54) **VERBINDUNGSVORRICHTUNG FÜR LICHTWELLENLEITKABELROHRE**

(30) Priorität: 15.09.2020 DE 102020123968
(71) Anmelder: Elitex GmbH, 85247 Schwabhausen (DE)
(72) Erfinder: STARK, Ingo, 85247 Schwabhausen (DE)
(74) Vertreter: Wittmann, Ernst-Ulrich

(57) **Zusammenfassung**

Die vorliegende Erfindung betrifft eine Verbindungsvorrichtung zum Verbinden eines Endes eines ersten Lichtwellenleitkabelrohres mit einem Ende eines zweiten Lichtwellenleitkabelrohres, wobei das erste Lichtwellenleitkabelrohr und das zweite Lichtwellenleitkabelrohr ausgebildet sind, ein Lichtwellenleitkabel aufzunehmen. Die Verbindungsvorrichtung umfasst eine Trägereinheit mit einer Unterseite und einer Oberseite. Zudem umfasst die Verbindungsvorrichtung eine Deckeleinheit mit einer Unterseite und einer Oberseite. Die Trägereinheit und die Deckeleinheit weisen an einem jeweiligen Stirnende eine erste und eine zweite Aufnahmeöffnung auf, die zur Aufnahme der Enden des ersten Lichtwellenleitkabelrohres und des zweiten Lichtwellenleitkabelrohres ist. Zudem weisen die Trägereinheit auf der Oberseite eine erste Nut in Längserstreckungsrichtung der Trägereinheit beginnend von der ersten Aufnahmeöffnung verlaufend bis zur zweiten Aufnahmeöffnung auf und die Deckeleinheit weist auf der Unterseite eine weitere Nut in Längserstreckungsrichtung der Deckeleinheit beginnend von der ersten Aufnahmeöffnung verlaufend bis zur zweiten Aufnahmeöffnung auf. Wobei eine Abdeckvorrichtung die weitere Nut umfasst und in einer zweiten Nut in der Deckeleinheit (120) montiert ist. Ferner ist die Deckeleinheit auf der Trägereinheit montierbar und die erste Nut und die weitere Nut bilden in Längserstreckungsrichtung der Deckeleinheit und der Trägereinheit im montierten Zustand einen Führungskanal zurAufnahme für ein Lichtwellenleitkabel aus. Die Verbindungsvorrichtung ist dadurch gekennzeichnet, dass der Führungskanal einen Innendurchmesser aufweist, der kleiner ist als ein ausgebildeter Innendurchmesser der ersten Aufnahmeöffnung und der zweiten Aufnahmeöffnung im montierten Zustand der Deckeleinheit auf der Trägereinheit.

## Beschreibung

Die vorliegende Erfindung betrifft eine Verbindungsvorrichtung zum Verbinden von Lichtwellenleitkabelrohren, insbesondere von einem Ende eines ersten Lichtwellenleitkabelrohres mit einem Ende eines zweiten Lichtwellenleitkabelrohres. Zudem betrifft die vorliegende Erfindung ein Verfahren zur Herstellung einer Verbindung zwischen einem Ende eines ersten Lichtwellenleitkabelrohres und einem Ende eines zweiten Lichtwellenleitkabelrohres unter Verwendung der erfindungsgemäßen Verbindungsvorrichtung. Ferner betrifft die Erfindung die Verwendung der Verbindungsvorrichtung.

Der Breitbandausbau unter Verwendung von Lichtwellenleitkabeln (Glasfaser) ist für einen modernen Wirtschaftsstandort ebenso wichtig wie Infrastruktur und Energieversorgung. Daher erfolgen hohe Investitionen, um alle Städte und Kommunen an das Breitbandnetz anzubinden. Voraussetzung für den Breitbandausbau ist eine qualitativ hochwertige und damit verbundene langlebige Leerverrohrung mit Lichtwellenleitkabelrohren zur Aufnahme der Lichtwellenleitkabel. Nur damit können eine hohe Funktionalität und eine lange Nutzungsdauer der benötigten Kommunikationsnetze gewährleistet werden.

Die Lichtwellenleitkabelrohre werden als Zubringerleitungen sowohl im Ort, als auch außerhalb von Ortschaften verwendet. In die Lichtwellenleitkabelrohre werden die Lichtwellenleitkabel eingezogen bzw. eingeblasen. Im Stand der Technik bekannte Lichtwellenleitkabelrohre weisen eine glatte Außenoberfläche auf und sind innen meist längsgerieft, womit eine erhöhte Einblaslänge sichergestellt werden kann. Die Lichtwellenleitkabelrohre werden verwendet, um einen einzelnen Knotenpunkt (eng.: Point of Presence (PoP)), beispielsweise einen Gebäudeanschluss mit einem Verteilpunkt zu verbinden. Bei dem Einbringen der Lichtwellenleitkabelrohre in das Erdreich kann der Fall eintreten, dass dieses durch mechanische Belastungen derart beschädigt wird, dass kein Einziehen oder Einblasen des Lichtwellenleitkabels ohne eine Beschädigung dessen erfolgen kann. Auch kann nicht gewährleistet werden, dass bei beschädigten Lichtwellenleitkabelrohren keine Substanzen (Feuchtigkeit, Fremdkörper, usw.) in dieses eindringen und sich negativ auf das Lichtwellenleitkabel auswirken. Beispielsweise kann bei einem beschädigten Lichtwellenleitkabelrohr kein Einziehen und/oder Einblasen erfolgen, da die beschädigte Stelle eine Kante oder einen Überstand ausbildet, was das Lichtwellenleitkabel ebenfalls beschädigen würde und somit zu Übertragungsstörungen in dem Lichtwellenleitkabel führen würde. Auch können Feuchtigkeit und Fremdkörper ein bereits eingezogenes Lichtwellenleitkabel beschädigen, sodass Übertragungsstörungen auftreten und im schlechtesten Fall das Lichtwellenleitkabel ersetzt werden muss. Das Ersetzen eines Lichtwellenleitkabels geht mit enormen Aufwand und Kosten einher. Daher ist es notwendig, dass Lichtwellenleitkabelrohre keine Beschädigung aufweisen und eine Beschädigung des Lichtwellenleitkabelrohres vor dem Einziehen und/oder Einblasen eines Lichtwellenleitkabels bzw. eines weiteren Lichtwellenleitkabels instandgesetzt wird.

Derzeit sind im Stand der Technik insbesondre keine Vorrichtung oder Verfahren bekannt, womit ein mit einem Lichtwellenleitkabel (Glasfaser) belegtes Lichtwellenleitkabelrohr nach einer Beschädigung derart instandgesetzt werden kann, dass ein weiteres Lichtwellenleitkabel in unbeschädigter Weise eingezogen und/oder eingeblasen werden kann, ohne ggf. selbst an der instandgesetzten Stelle beschädigt zu werden. Problematisch bei einer Instandsetzung ist hierbei, dass die beschädigte Stelle des Lichtwellenleitkabelrohres entfernt und durch eine entsprechende Verbindung ersetzt werden muss und insbesondere ein bereits eingebrachtes Lichtwellenleitkabel (Glasfaser) nicht entfernt werden muss. An der instandgesetzten Stelle können bei bekannten Verbindungen Kanten und Überstände an den entsprechenden Verbindungsstellen entstehen, an denen das Lichtwellenleitkabel beim Einziehen und/oder Einblasen hängen bleibt und/oder beschädigt wird. Auch muss die Verbindung dichtend abschließen, um ein Eindringen von Substanzen von außerhalb zu verhindern, sowie den Belastungen durch den Luftdruck zum Einblasen des Lichtwellenleitkabels standhalten.

Ausgehend davon, liegt der vorliegenden Erfindung die technische Aufgabe zugrunde, die im Stand der Technik bekannten Nachteile wenigstens teilweise zu überwinden und eine Lösung für das Verbinden von Enden zweier Lichtwellenleitkabelrohre bereitzustellen, bei welcher insbesondere der lichte Innendurchmesser der zu verbindenden Lichtwellenleitkabelrohre auch im Übergangsbereich möglichst exakt erhalten bleibt.

Diese Aufgabe wird durch die Gegenstände der unabhängigen Patentansprüche gelöst, insbesondere durch eine Verbindungsvorrichtung zum Verbinden von Lichtwellenleitkabelrohren.

Gemäß einem ersten Aspekt bezieht sich die Erfindung auf eine Verbindungsvorrichtung mit den Merkmalen des Patentanspruchs 1. Die Verbindungsvorrichtung ist zum Verbinden eines Endes eines ersten Lichtwellenleitkabelrohres mit einem Ende eines zweiten Lichtwellenleitkabelrohres ausgebildet. Unter einem Lichtwellenleitkabelrohr ist ein Rohr, vorzugsweise ein biegsames Rohr zu verstehen, in dem das hochempfindliche Lichtwellenleitkabel (Glasfaser) aufgenommen und umschlossen und somit vor äußeren Einflüssen (z.B. mechanischen Einflüssen, Substanzen usw.) geschützt ist. In das Lichtwellenleitkabelrohr wird das Lichtwellenleitkabel, oder eine Vielzahl an Lichtwellenleitkabel per Druckluft eingebracht und kann so von einem zentralen Anschlusspunkt zu den Endpunkten verteilt werden. Auch kann vorgesehen sein, dass eine Vielzahl an Lichtwellenleitkabelrohre in einem gemeinsamen Lichtwellenleitkabel-Schutzrohr aufgenommen ist. Dies ist von Vorteil, wenn größere Entfernungen überbrückt werden müssen und ein zusätzlicher Schutz vor mechanischer Belastung, o. ä., bereitgestellt werden soll. Das Lichtwellenleitkabelrohr weist vorzugsweise optimale Gleiteigenschaften auf, so dass das Lichtwellenleitkabel durch dieses, beispielsweise per Druckluft durchgeführt werden kann. Somit sind das erste und das zweite Lichtwellenleitkabelrohr ausgebildet, dass Lichtwellenleitkabel aufzunehmen. Weiterhin ist im Sinne der vorliegenden Erfindung unter den Enden des ersten und zweiten Lichtwellenleitkabelrohres das Ende zu verstehen, welches von der Verbindungsvorrichtung aufgenommen wird.

Die Verbindungsvorrichtung weist eine Trägereinheit mit einer Unterseite und einer Oberseite auf. Unter einer Trägereinheit ist im Sinne der vorliegenden Erfindung eine Baugruppe der Verbindungsvorrichtung zu verstehen, die bewegliche Teile und/oder weitere Baugruppen aufnimmt, bzw. auf der bewegliche Teile und/oder weitere Baugruppen montiert werden können.

Die Verbindungsvorrichtung weist eine Deckeleinheit mit einer Unterseite und einer Oberseite auf. Unter einer Deckeleinheit ist im Sinne der vorliegenden Erfindung eine Baugruppe zu verstehen, welche weitere bewegliche Teile und/oder Baugruppen aufnehmen kann und als eine eigene Baugruppe auf der Trägereinheit über eine lösbare Verbindung montiert werden kann. Alternativ kann eine Verbindung vorgesehen werden, die nicht lösbar ist.

Gemäß dem ersten Aspekt der vorliegenden Erfindung weisen die Trägereinheit und die Deckeleinheit an den jeweiligen Stirnenden eine erste und eine zweite Aufnahmeöffnung auf. Die erste und zweite Aufnahmeöffnung sind ausgebildet Enden des ersten Lichtwellenleitkabelrohres und des zweiten Lichtwellenleitkabelrohres aufzunehmen. Die Aufnahmeöffnungen weisen vorzugsweise eine entsprechende Form auf, so dass die Enden des ersten Lichtwellenleitkabelrohres und des zweiten Lichtwellenleitkabelrohres ohne mechanische Bearbeitung und/oder Verformung in die Aufnahmeöffnungen aufgenommen bzw. eingesetzt werden können.

Zudem weist die Trägereinheit auf der Oberseite eine erste Nut in Erstreckungsrichtung der Trägereinheit beginnend von der ersten Aufnahmeöffnung verlaufend bis zur zweiten Aufnahmeöffnung auf. Unter einer Nut ist im Sinne der vorliegenden Erfindung ein Bereich zu verstehen, an dem Material ausgenommen ist und somit eine Vertiefung gegenüber der Oberseite der Trägereinheit ausbildet. Ferner weist die Deckeleinheit auf der Unterseite eine weitere Nut in Erstreckungsrichtung der Deckeleinheit beginnend von der ersten Aufnahmeöffnung verlaufend bis zur zweiten Aufnahmeöffnung auf. Die weitere Nut auf der Unterseite der Deckeleinheit weist dieselben oder vergleichbare Eigenschaften wie die Nut an der Oberseite der Trägereinheit auf.

Weiterhin ist die Deckeleinheit auf der Trägereinheit montierbar. Im Sinne der vorliegenden Erfindung ist unter montierbar zu verstehen, dass die Deckeleinheit auf die Trägereinheit aufgesetzt werden kann und auf dieser montiert werden kann, so dass beide separaten Baugruppen, bzw. Einheiten nach dem Montieren eine wiedertrennbare Einheit ausbilden. Im montierten Zustand bilden die erste Nut und die weitere Nut verlaufend in Erstreckungsrichtung der Deckeleinheit und der Trägereinheit einen Führungskanal zur Aufnahme für ein Lichtwellenleitkabel aus. Im Sinne der vorliegenden Erfindung ist unter dem montierten Zustand der Zustand zu verstehen, wenn die Deckeinheit und die Trägereinheit aufeinander gesetzt sind, so dass die Oberseite der Trägereinheit in Kontakt mit der Unterseite der Deckeleinheit steht. Somit bilden die jeweiligen Nuten der Trägereinheit und der Deckeleinheit im montierten Zustand zusammen einen Führungskanal zur Aufnahme bzw. Durchführung des Lichtwellenleitkabels aus. Der Führungskanal bildet einen durchgehenden zylindrischen Hohlraum mit einem spezifischen Innendurchmesser aus. Dabei ist entscheidend, dass der Führungskanal durch die erste Nut und die weitere Nut im montierten Zustand ausgebildet wird, wobei die weitere Nut in der Deckeleinheit als eigenständige von der Deckeleinheit trennbare Einheit ausgebildet sein kann.

Gemäß dem ersten Aspekt ist die vorliegende Erfindung dadurch gekennzeichnet, dass der Führungskanal einen Innendurchmesser aufweist, der kleiner ist als ein ausgebildeter Innendurchmesser der ersten Aufnahmeöffnung und der zweiten Aufnahmeöffnung im montierten Zustand der Deckeleinheit auf der Trägereinheit. Die erste Aufnahmeöffnung und die zweite Aufnahmeöffnung bilden den gleichen Innendurchmesser aus, welcher größer ist als der Innendurchmesserdes Führungskanals im montierten Zustand der Verbindungsvorrichtung.

Der vorliegenden Erfindung liegt die Kenntnis zu Grunde, dass ein Bedarf für eine Vorrichtung zum Instandsetzen von beschädigten Lichtwellenleitkabelrohren besteht, so dass diese nach erfolgter Instandsetzung ein Lichtwellenleitkabel entsprechend schützend aufnehmen können. Derzeit ist keine Vorrichtung zum Instandsetzen eines Lichtwellenleitkabelrohres bekannt, womit ein beschädigtes Lichtwellenleitkabelrohr nicht weiter für das Einziehen und/oder Einblasen eines Lichtwellenleitkabels verwendet werden kann.

In vorteilhafter Weise wird durch die erfindungsgemäße Verbindungsvorrichtung eine Lösung geschaffen, ein Lichtwellenleitkabelrohr, welches durch eine Beschädigung getrennt werden musste, derart miteinander zu verbinden, dass dieses nach der Instandsetzung weiter verwendet und ein Lichtwellenleitkabel eingezogen und/oder eingeblasen werden kann. Insbesondere wird durch die erfindungsgemäße Verbindungsvorrichtung eine Verbindung zwischen den Enden des getrennten Lichtwellenleitkabels derart hergestellt, sodass keine Kante und/oder Überstände an den Verbindungsbereichen entstehen. Somit kann gewährleistet werden, dass ein mit hoher Druckluft eingeblasenes Lichtwellenleitkabel über die Verbindungsbereiche gleitet, ohne dabei beschädigt zu werden.

Weiterhin vorteilhaft ist, dass ein beschädigter Bereich eines Lichtwellenleitkabelrohes instandgesetzt bzw. ersetzt werden kann, wenn in das Lichtwellenleitkabelrohr bereits ein Lichtwellenleitkabel eingezogen ist. Das bestehende Lichtwellenleitkabel muss nicht durchtrennt und aufwendig wieder verschweißt werden. Somit können auch beschädigte (gebrochene) Lichtwellenleitkabelrohre mit eingezogenem Lichtwellenleitkabel wieder für das Einblasen von weiteren Lichtwellenkabeln nach einer Instandsetzung mit der vorliegenden Erfindung eingesetzt werden. Dies wird durch den kantenfreien Übergang zwischen den Lichtwellenleitkabelrohren und derVerbindungsvorrichtung ermöglicht.

Weiterhin vorteilhaft ist, dass die erfindungsgemäße Verbindungsvorrichtung eine abdichtende Verbindung, insbesondere gegenüber Feuchtigkeit, Substanzen und Fremdkörpern bereitstellt. Somit ist das durch die Verbindungsvorrichtung durchgeführte Lichtwellenleitkabel vor den äußeren Einflüssen geschützt.

Zudem wird durch die erfindungsgemäße Verbindungsvorrichtung das Lichtwellenleitkabelrohr derart dichtend an den Enden verbunden, dass ein Entweichen der Druckluft derart unterbunden wird, sodass das Einblasen des Lichtwellenleitkabels durchgeführt oder verbessert werden kann.

Lichtwellenleitkabelrohre haben dabei vorzugsweise einen Außendurchmesser zwischen 5 mm und 25 mm, insbesondere 10 mm, 12 mm, 14 mm, 16 mm oder 20 mm. Der Innendurchmesser solcher Lichtwellenleitkabelrohre liegt in Abhängigkeit von der gewählten Materialdicke zwischen 3,5 mm und 16 mm, insbesondere 3,5 mm, 4,0mm, 5,5 mm, 6,0 mm, 8,0 mm, 10,0 mm, 11,4 mm, 12,0 mm, 13,0 mm, 15,0 mm, und 16 mm.

Vorteilhafte Ausführungsformen und Weiterbildungen ergeben sich aus den Unteransprüchen, sowie aus der Beschreibung unter Bezugnahme auf die Figuren.

In einer bevorzugten Ausführungsform der Erfindung weist die Deckeleinheit wenigstes zwei Führungsbolzen auf. Die Führungsbolzen können vorzugsweise derart ausgerichtet sein, dass diese diagonal zueinander angeordnet sind und somit ein Aufsetzen der Deckeleinheit auf die Trägereinheit ermöglichen, insbesondere ein Aufsetzen ohne Verkanten ermöglichen. Ferner weist die Trägereinheit wenigstens zwei in der Lage zu den Führungsbolzen übereinstimmende Führungsbolzenaufnahmen auf. In die Führungsbolzenaufnahmen werden die Führungsbolzen aufgenommen. Die Führungsbolzenaufnahmen weisen eine Tiefe und einen Durchmesser auf, der entsprechend für die Aufnahme Führungsbolzen ausgelegt ist. In einer weiteren Ausgestaltung können die Führungsbolzenaufnahmen als eine Passung ausgebildet sein, so dass durch die Führungsbolzen im Zusammenspiel mit den Führungsbolzenaufnahmen eine kraftschlüssige Verbindung ausgebildet werden kann und die Deckeleinheit mit der Trägereinheit kraftschlüssig verbunden ist.

In einer weiteren Ausführungsform sind wenigstens vier Führungsbolzen und korrespondierende Führungsbolzenaufnahmen vorgesehen. Über die Führungsbolzen und die aufnehmenden Führungsbolzenaufnahmen kann ein verkanten freies Aufsetzen der Deckeleinheit auf der Trägereinheit und somit eine Montage der Deckeleinheit auf der Trägereinheit erfolgen.

In einer bevorzugten Ausführungsform können die Führungsbolzen und/oder Führungsbolzenaufnahmen Durchgangsbohrungen umfassen. Bevorzugt haben diese Bohrungen Gewinde, sodass in vorteilhafterweise mittels eines Schraubmittels eine kraftschlüssige Verbindung zwischen der Trägereinheit und der Deckeleinheit im montierten Zustand entsteht, indem die Deckeleinheit auf die Trägereinheit gedrückt wird.. So wird eine ausreichend hohe Dichtigkeit der Verbindungsvorrichtung erreicht, um die Lichtwellenleitkabel durchblasen zu können. So kann eine qualitativ hochwertige und damit verbundene langlebige Verbindung sichergestellt werden.

In einer bevorzugten Ausführungsform der Erfindung ist der Innendurchmesser des Führungskanals gleich einem Innendurchmesser des ersten Lichtwellenleitkabelrohres und des zweiten Lichtwellenleitkabelrohres. In vorteilhafter Weise wird hiermit ermöglicht, dass ein entsprechendes Lichtwellenleitkabel durch den Führungskanal eingezogen und/oder eingeblasen werden kann, ohne dabei beschädigt zu werden. Mittels der gleichen Durchmesser werden Kanten oder ein Überstand vermieden, an denen das Lichtwellenleitkabel beim Einziehen und/oder Einblasen hängen bleibt bzw. beschädigt werden würde. Diesbezüglich wird ein Einziehen und/oder Einblasen eines Lichtwellenleitkabels in ein instandgesetztes Lichtwellenleitkabelrohr mit bereits vorhandenem Lichtwellenleitkabel ermöglicht, ohne an dem Übergang zwischen der Verbindungsvorrichtung und den Lichtwellenleitkabelrohren (der geschaffenen Verbindungsstelle) beschädigt zu werden.

In einer bevorzugten Ausführungsform der Erfindung weisen die jeweiligen Aufnahmeöffnungen Aufnahmebereiche auf. Die Aufnahmebereiche verlaufen von den Stirnseiten der Trägereinheit und der Deckeleinheit zu dem Führungskanal, insbesondere in Verlaufsrichtung des im montierten Zustand ausgebildeten Führungskanals. Die Aufnahmebereiche sind derart ausgebildet, dass diese die Enden der Lichtwellenleitkabelrohre vollständig aufnehmen und diese dichtend umschließen. In einer Ausführungsform sind die Aufnahmebereiche ebenfalls als Nuten ausgebildet und bilden im montierten Zustand einen Führungskanal zur Aufnahme des Lichtwellenleitkabels aus. Der Führungskanal der Aufnahmebereiche weist einen spezifischen Innendurchmesser auf. Dieser Innendurchmesser weist einen größeren Innendurchmesser auf, als der Innendurchmesser des durch die Trägereinheit und Deckeleinheit ausgebildeten Führungskanals. In vorteilhafter Weise wird erreicht, dass keine Kante oder Überstand an dem Übergang von den Enden des Lichtwellenleitkabelrohres zu der Verbindungsvorrichtung ausgebildet ist. In einer weiteren Ausführungsform ist vorgesehen, dass die Enden des Lichtwellenleitkabelrohres durch die Aufnahmebereiche der Verbindungsvorrichtung wenigstens in einer Länge von 10 mm bis 100 mm, vorzugsweise in einer Länge von 20 mm bis 50 mm aufgenommen werden. Somit wird eine abdichtende Verbindung zwischen den Enden der Lichtwellenleitkabelrohre und der Verbindungsvorrichtung erreicht. Ferner werden die Enden der Lichtwellenleitkabelrohre derart in den Aufnahmebereichen aufgenommen, so dass einem Herausrutschen dieser entgegengewirkt werden kann.

In einer bevorzugten Ausführungsform der Erfindung ist der jeweilige Aufnahmebereich als eine profilierte Einkerbung ausgebildet. Unter einer profilierten Einkerbung ist im Sinne der vorliegenden Erfindung eine fortlaufende wendelartige Einkerbung zu verstehen, die an der Wand des Aufnahmebereiches ausgebildet ist. Die Einkerbung weist Berge und Täler auf, wodurch eine unregelmäßig ausgebildete Oberfläche erzeugt und der Reibungskoeffizient erhöht wird. In einer weiteren Ausgestaltung kann die profilierte Einkerbung als nicht fortlaufende Einkerbung ausgebildet sein, womit aufeinanderfolgende Kerben und Materialerhöhungen ohne Verbindung zueinander vorgesehen sind. Durch die profilierte Einkerbung und die damit ausgebildeten Berge und Täler wird die Reibungszahl zwischen der Aufnahmebereiche und den Enden der Lichtwellenleitkabelrohre erhöht bzw. gesteigert. Das mit den Aufnahmebereichen in Kontakt stehende Material der Lichtwellenleitkabelrohre nimmt bei dem Montieren der Verbindungsvorrichtung die Form der profilierten Einkerbung an und wird in diese aufgenommen. Hieraus ergibt sich eine verbesserte Haftung bzw. Haftreibung, sodass die Lichtwellenleitkabelrohre nur erschwert bzw. begrenzt aus den Aufnahmebereichen der Verbindungsvorrichtung herausrutschen.

In einer bevorzugten Ausführungsform der Erfindung ist der jeweilige Aufnahmebereich als eine Reibfläche ausgebildet. Insbesondere kann die Reibfläche als eine angeraute Reibfläche ausgebildet sein. Unter einer angerauten Reibfläche ist eine Reibfläche zu verstehen, bei der durch mechanische Bearbeitung die Oberfläche des Materials der Trägereinheit und der Deckeleinheit, insbesondere die Aufnahmebereiche in Berge und Täler als Erhöhung und Vertiefung zerlegt werden und somit die tragende Oberfläche der Aufnahmebereiche vermindert wird. Beispielsweise kann die Oberflächenbeschaffenheit durch an Rändelverfahren derart bearbeitet werden, so dass diese rauer und griffiger wird. Die Reibzahl kann durch das Ausbilden der Reibfläche maximiert werden. Hierdurch wird das Material des Lichtwellenleitkabelrohres beim Verklemmen in der Verbindungsvorrichtung an die Form der Reibfläche angepresst und nimmt deren Form an. Somit wird die Reibzahl erhöht und der Sitz des Lichtwellenleitkabelrohres in dem Aufnahmebereich fester bzw. verbessert.

In einer bevorzugten Ausführungsform der Erfindung weist der Aufnahmebereich am gegenüberliegenden Ende zur Aufnahmeöffnung eine Kabelrohrabdichtung auf. Die Kabelrohrabdichtung ist ausgebildet, eine abdichtende Verbindung zwischen dem Ende eines ersten Lichtwellenleitkabelrohres und einem Ende eines zweiten Lichtwellenleitkabelrohres herzustellen. Insbesondere ist die Kabelrohrabdichtung ausgebildet eine abdichtende Verbindung zwischen dem durch den Aufnahmebereich aufgenommene Lichtwellenleitkabelrohr und der Verbindungsvorrichtung und somit der Trägereinheit und/oder der Deckeleinheit herzustellen. Die Kabelrohrabdichtung liegt an dem an der jeweiligen Nut angrenzenden Ende des Aufnahmebereiches an. In einer Ausgestaltung kann die Kabelrohrabdichtung als eine Radialdichtung ausgebildet werden. Die Kabelrohrabdichtung liegt hierbei an der Außenseite des Lichtwellenleitkabelrohres an und bildet eine Dichtung für Substanzen, wie Flüssigkeiten und weiterer Fremdkörper aus. Des Weiteren wird durch die als Radialdichtung ausgebildete Kabelrohrabdichtung ein Entweichen der Druckluft zum Einblasen des Lichtwellenleitkabels unterbunden. Die Kabelrohrabdichtung ist derart ausgebildet, dass diese zwei als Flügel ausgebildet abstehende Flächen aufweist, welche an der Oberseite der Trägereinheit bzw. eine der Unterseite der Deckeleinheit anliegen. Hierdurch wird ein Eindringen von Substanzen über die Kontaktflächen zwischen der Trägerseite und Deckelseite durch die Kapillaritätwirkung vermieden.

In einer bevorzugten Ausführungsform der Erfindung ist die Kabelrohrabdichtung aus einem Material ausgebildet, ausgewählt aus einer Gruppe umfassend Elastomere, Fluorkunststoffe, Fasermaterialien, Graphit mit und ohne Metalleinlagen, synthetischen Kautschuk insbesondere Nitril-Butadien-Kautschuk, Hydrierter Nitril-Kautschuk, Ethylen-Propylen-Dien-Kautschuk, Ethylen-Propylen-Terpolymer-Kautschuk, Silikon-Kautschuk, Silicone-Kautschuk, Fluor-Silikon-Kautschuk, Fluorsilikonkautschuk, Fluorsilikon, Fluor-Kautschuk, Fluorkarbon-Kautschuk, Acrylat-Kautschuk, Polyethylacrylat, Perfluor-Kautschuk, Perfluorkautschuk, Perfluor-Kautschuk von DuPont, Polychlorpren-Kautschuk, Chlorkautschuk, Chlorsulfonyl-Polyäthylen-Kautschuk, Polyester-Urethan-Kautschuk, Polyäther-Urethan-Kautschuk, Butyl-Kautschuk, Natur-Kautschuk, Styrol-Butadien-Kautschuk, Santoprene, Styrol-Butadien-Copolymer, Polytetrafluorethylen, expandiertes Tetrafluoroethylene / Tetrafluorethylen, Perfluorethylenpropylen-Copolymer, Perfluoralkoxy-Copolymer, Polyvinylidenfluorid, Kombinationen hiervon und dergleichen.

In einer bevorzugten Ausführungsform der Erfindung sind auf der Oberseite der Trägereinheit eine erste und eine zweite Einkerbung ausgebildet. Die erste und die zweite Einkerbung verlaufen entlang der ersten Nut. Die Einkerbung weist vorzugsweise eine Kerbentiefe von 0,1 bis 5 mm auf, um die Dichtung ausreichend aufzunehmen und zu stabilisieren. Die erste und die zweite Einkerbung weisen vorzugsweise eine Nutdichtung auf. Die Nutdichtung ist als eine Lineardichtung ausgebildet. Die Nutdichtung weist eine Breite im Bereich von zwischen 0,5 und 20 mm auf. Zudem weist die Nutdichtung eine Höhe im Bereich von 0,5 bis 7 mm auf. Durch die Nutdichtung wird ein Eindringen von Substanzen von außerhalb über die Längsseite der Verbindungsvorrichtung in den Führungskanal unterbunden. Zugleich werden schädliche Einflüsse von außen auf das innerhalb des Führungskanals liegende Lichtwellenleitkabel abgehalten. Ferner wird die Verbindungsvorrichtung derart abgedichtet, dass keine Druckluft beim Einblasen des Lichtwellenleitkabels entweicht. In einer vorteilhaften Ausgestaltung überlappen die Enden der Nutdichtung mit den als Flügel ausgebildet abstehenden Flächen der Kabelrohrabdichtung.

In einer bevorzugten Ausführungsform der Erfindung sind auf der Unterseite der Deckeleinheit eine erste und eine zweite Einkerbung verlaufend entlang der weiteren Nut ausgebildet. Die Einkerbung weist vorzugsweise eine Kerbentiefe von 0,1 bis 5 mm auf, um die Dichtung ausreichend aufzunehmen und zu stabilisieren. Die erste und die zweite Einkerbung weisen vorzugsweise eine Nutdichtung auf. Die Nutdichtung ist als eine Lineardichtung ausgebildet. Die Nutdichtung weist eine Breite im Bereich von 0,5 bis 20 mm auf. Durch die Nutdichtung wird ein Eindringen von Substanzen von außerhalb über die Längsseite der Verbindungsvorrichtung in den Führungskanal unterbunden. Zugleich werden schädliche Einflüsse von außen auf das innerhalb des Führungskanals liegende Lichtwellenleitkabel abgehalten. Ferner wird die Verbindungsvorrichtung derart abgedichtet, dass keine Druckluft beim Einblasen des Lichtwellenleitkabels entweicht. In einer vorteilhaften Ausgestaltung überlappen die Enden der Nutdichtung mit den als Flügel ausgebildet abstehenden Flächen der Kabelrohrabdichtung.

In einer bevorzugten Ausführungsform der Erfindung sind die jeweiligen Nutdichtungen aus einem Material ausgebildet, ausgewählt aus einer Gruppe umfassend Elastomere, Fluorkunststoffe, Fasermaterialien, Graphit mit und ohne Metalleinlagen, synthetischen Kautschuk insbesondere Nitril-Butadien-Kautschuk, Hydrierter Nitril-Kautschuk, Ethylen-Propylen-Dien-Kautschuk, Ethylen-Propylen-Terpolymer-Kautschuk, Silikon-Kautschuk, Silicone-Kautschuk, Fluor-Silikon-Kautschuk, Fluorsilikonkautschuk, Fluorsilikon, Fluor-Kautschuk, Fluorkarbon-Kautschuk,Acrylat-Kautschuk, Polyethylacrylat, Perfluor-Kautschuk, Perfluorkautschuk, Perfluor-Kautschuk von DuPont, Polychlorpren-Kautschuk, Chlorkautschuk, Chlorsulfonyl-Polyäthylen-Kautschuk, Polyester-Urethan-Kautschuk, Polyäther-Urethan-Kautschuk, Butyl-Kautschuk, Natur-Kautschuk, Styrol-Butadien-Kautschuk, Santoprene, Styrol-Butadien-Copolymer, Polytetrafluorethylen, expandiertes Tetrafluoroethylene / Tetrafluorethylen, Perfluorethylenpropylen-Copolymer, Perfluoralkoxy-Copolymer, Polyvinylidenfluorid, Kombinationen hiervon und dergleichen.

In einer bevorzugten Ausführungsform der Erfindung sind die Kabelrohrabdichtung und die erste und die weitere Nutdichtung in einem Stück ausgebildet. In einer Ausgestaltung werden die Kabelrohrabdichtung und die erste und die weitere Nutdichtung in einem Stück gespritzt. Durch das Spritzen der Nutdichtung und Kabelrohrabdichtung in einem Stück können individuellen Dichtigkeitsanforderungen erfüllt und komplexe Dichtungsgeometrien erstellt werden, um die Verbindungsvorrichtung entsprechend gegen das Eindringen von Substanzen und dem Einwirken von äußeren Einflüssen abzudichten. Durch eine einstückige Ausgestaltung sind keine Überlappungen gegeben, welche zu einer undichten Stelle bei nicht ausreichender Überlappung und/oder Quetschung führen würden. Durch die einstückige Ausgestaltung sind die Nutdichtung und die Kabelrohrabdichtung individuell auf die Verwendung und zur Abdichtung der Verbindungsvorrichtung angepasst. Hiermit ergibt sich einer vorteilhafte Verbesserung in Bezug auf die Verliersicherheit, Anwendbarkeit bei der Montage und Dauerhaftigkeit im Betrieb.

In einer bevorzugten Ausführungsform der Erfindung weisen die Trägereinheit und die Deckeleinheit wenigstens zwei Durchgangsbohrungen jeweils seitlich der ersten Nut und der weiteren Nut in Erstreckungsrichtung angeordnet auf. Die zwei Durchgangsbohrungen weisen vorzugsweise jeweils den gleichen Abstand zur Stirnseite und zur Längsseite der Verbindungsvorrichtung auf. Bevorzugt weisen die Trägereinheit und die Deckeleinheit 3 bis 10 angeordnete Durchgangsbohrungen und besonders bevorzugt 6 angeordnete Durchgangsbohrungen auf. Die Durchgangsbohrungen sind vorzugsweise mit gleichen Abständen zu einander in der Trägereinheit und der Deckeleinheit eingebracht. Selbstverständlich liegt es auch im Sinn der vorliegenden Erfindung, dass die Zahl der Bohrungen respektive Verschraubungen auch der Läge der Ausgestaltungsform weiter angepasst werden kann, um eine dichte Verbindung der Bauteile sicher zu stellen. Die Durchgangsbohrungen weisen einen Durchmesser für M4 auf. Es sind insbesondere eine Zylinderkopfschraube entsprechend DIN912 vorgesehen.

In einer bevorzugten Ausführungsform der Erfindung sind die Durchgangsbohrungen zur Aufnahme einer Schraube ausgebildet. Über die Durchgangsbohrungen und die Schraube kann in Verbindung mit einem Gegenstück zur Schraube eine kraftschlüssige Verbindung zwischen der Trägereinheit und der Deckeleinheit der Verbindungsvorrichtung hergestellt werden.

In einer bevorzugten Ausführungsform der Erfindung weisen die Trägereinheit und die Deckeleinheit an der jeweiligen Außenseite in Längserstreckungsrichtung eine Langnut auf. Die jeweilige Langnut ist ausgebildet, um eine Verschraubeinheit mit Gewindebohrungen zum Sichern der Schrauben, als Gegenstück zu den Schrauben, aufzunehmen. Die durch die Durchgangsbohrungen aufgenommenen Schrauben können in die Verschraubeinheit eingeschraubt werden, wodurch eine kraftschlüssige Verbindung zwischen der Deckeleinheit und der Trägereinheit hergestellt wird. Die Verschraubeinheit kann in einer Ausgestaltung als eine Gewindeschiene ausgebildet sein, welche das Gegenstück zu den Schrauben in der Durchgangsbohrung ist. Die Gewindeschiene kann aus Aluminium, Stahl, insbesondere aus einem rostfreien und säurebeständigen Stahl, wie zum Beispiel 1.43.71 oder 1.44.04 hergestellt sein.

In einer alternativen Ausführungsform der Erfindung sind die Schrauben über eine Mutter gesichert. Die Schrauben können über eine Mutter an der Unterseite der Trägereinheit gekontert sein. Die Muttern können in einer weiteren Ausgestaltung über eine Aufnahme in die Unterseite der Trägereinheit eingelassen sein, sodass diese ebenbündig mit der Unterseite der Trägereinheit abschließen.

In einer bevorzugten Ausführungsform der Erfindung sind die Trägereinheit und die Deckeleinheit aus einem Material ausgebildet, ausgewählt aus einer Gruppe umfassend Kunststoffe, insbesondere Hartkunststoffe wie beispielsweise Polyoxymethylen (POM), Acrylnitril-Butadien-Styrol (ABS), Polycarbonate (PC), Polyvinylchlorid (PVC), Kombinationen hiervon und dergleichen.

In einer bevorzugten Ausführungsform der Erfindung weist die Deckeleinheit eine Erstreckungslänge in einem Bereich von 75 bis 90% der Erstreckungslänger der Trägereinheit auf. Zudem ist an der jeweiligen Stirnseite /der Deckeleinheit eine Klemmeinheit vorgesehen. Die Klemmeinheit weist eine Erstreckungslänge von 12,5 bis 5% der Erstreckungslänge der Trägereinheit auf. In einer weiteren Ausgestaltung kann die Erstreckungslänge der Klemmeinheit entsprechend der Ausgestaltung des Aufnahmebereiches angepasst sein. Besonders bevorzugt sind darüber hinaus Baulängen zwischen 100 und 500 mm, insbesondere 250 bzw. 480 mm Baulängen.

In dieser vorteilhaften Ausgestaltung ist die Deckeleinheit in drei Baugruppen unterteilt und umfasst zwei als Klemmeinheiten ausgebildete Baugruppen und eine dritte als Hauptbereich ausgebildete Baugruppe. Die Klemmeinheiten und der Hauptbereich weisen entsprechende Durchgangsbohrungen zur Aufnahme von Schrauben für eine kraftschlüssige Verbindung zwischen der Trägereinheit und der Deckeleinheit auf.

In einer bevorzugten Ausführungsform der Erfindung kann die Deckeleinheit eine zweite Nut umfassen. Dabei kann die eine weitere Nut in der zweiten Nut trennbar angebracht werden.

Das hat den Vorteil, dass die empfindlichen Lichtwellenleitkabel, die teilweise aus einem Lichtwellenleitkabelrohr herausragen, zuerst in die erste Nut eingelegt werden können und dann durch die weitere Nut abgedeckt werden. Dies führt dazu, die Lichtwellenleitkabel nicht zwischen der Deckeleinheit und der Trägereinheit eingequetscht werden, da die weitere Nut durch die zweite Nut der Deckeleinheit eingeschlossen wird. So kann eine qualitativ hochwertige und damit verbundene langlebige Verbindung sichergestellt werden.

In einer bevorzugten Ausführungsform der Erfindung kann die zweite Nut ein U-Profil oder ein halbrundes Profil aufweisen.

Dies hat den Vorteil, dass die weitere Nut besonders effizient und platzsparend innerhalb der zweiten Nut untergebracht werden kann. Diese Anordnung der weiteren Nut innerhalb der zweiten Nut führt dazu, dass eine ausreichend hohe Dichtigkeit erreicht werden kann, um die Lichtwellenleitkabel durchblasen zu können. So kann eine qualitativ hochwertige und damit verbundene langlebige Verbindung sichergestellt werden

In einer bevorzugten Ausführungsform der Erfindung kann eine Abdeckvorrichtung in der zweiten Nut montiert werden. Dabei kann die Abdeckvorrichtung die weitere Nut umfassen.

Dies hat den Vorteil, dass die empfindlichen Lichtwellenleitkabel beim Verbinden von zwei Lichtwellenleitkabelrohren durch die Abdeckvorrichtung geschützt werden, indem ein Quetschen beim Montieren der Deckeleinheit verhindert wird. So kann eine qualitativ hochwertige und damit verbundene langlebige Verbindung sichergestellt werden.

In einer bevorzugten Ausführungsform der Erfindung kann die Abdeckvorrichtung auf der Trägereinheit und/oder in der Deckeleinheit montierbar sein. Insbesondere kann eine Unterseite der Abdeckvorrichtung mit der Oberseite der Trägereinheit in Kontakt treten. Bevorzugt jeweils zwischen den Einkerbung (bzw. der Nutdichtung) der Trägereinheit und der ersten Nut. Darüber hinaus kann bevorzugt eine Außenseite der Abdeckvorrichtung mit der zweiten Nut der Deckeleinheit in Kontakt treten.

Dies hat den Vorteil, dass die Abdeckvorrichtung wieder abnehmbar ist und je nach Anwendungsfall zuerst auf der Trägereinheit angebracht werden kann und anschließend durch die Deckeleinheit eingeschlossen werden kann. Die besondere Anordnung zwischen erster Nut und der Einkerbung bzw. Nutdichtung führt dazu, dass eine ausreichend hohe Dichtigkeit erhalten bleibt, um die Lichtwellenleitkabel durchblasen zu können. So kann eine qualitativ hochwertige und damit verbundene langlebige Verbindung sichergestellt werden.

In einer bevorzugten Ausführungsform der Erfindung kann die Abdeckvorrichtung mindestens ein Verbindungselement zum Befestigen an der Trägereinheit aufweisen. Außerdem kann die Trägereinheit mindestens ein zum Verbindungselement gegenteilig ausgebildetes Verbindungsaufnahmeelement jeweils seitlich der ersten Nut aufweisen. Das mindestens eine Verbindungsaufnahmeelement kann insbesondere zwischen der Einkerbung bzw. Nutdichtung und der ersten Nut der Trägereinheit vorgesehen sein. Die Verbindungselemente können bspw. Stifte, Noppen, Spitzen usw. aus Metall und/oder Plastik sein. Die Verbindungsaufnahmeelemente sind entsprechen so ausgebildet, dass sie die Verbindungselemente aufnehmen können und dabei mit ihnen einen Reibverschluss erzeugen, bspw. wie eine Steckverbindung. Dadurch ist die Abdeckvorrichtung auf der Trägereinheit sicher angebracht, kann aber auch wieder abgenommen werden. Alternativ können die Verbindungselemente zusammen mit den Verbindungselementen Klebstoffverbindungen ausbilden. In einer weiteren Ausführungsform kann die Verbindung der Abdeckvorrichtung auch durch Plastikschweißen erzeugt werden.

Dies hat den Vorteil, dass beim Montieren der Abdeckvorrichtung auf der Trägereinheit, die Abdeckvorrichtung unabhängig von der Deckeleinheit sicher und schnell angebracht werden kann. Die besondere Anordnung der Abdeckvorrichtung beim Montieren zwischen erster Nut und der Nutdichtung führt dazu, dass eine ausreichend hohe Dichtigkeit erhalten bleibt, um die Lichtwellenleitkabel durchblasen zu können, nachdem die Deckeleinheit angebracht wurde. So kann eine qualitativ hochwertige und damit verbundene langlebige Verbindung sichergestellt werden.

In einer bevorzugten Ausführungsform der Erfindung kann die Abdeckvorrichtung in Erstreckungsrichtung der Trägereinheit mindestens 20% einer Länge zwischen der ersten und zweiten Aufnahmeöffnung der Trägereinheit ausgebildet sein. Insbesondere kann 50% einer Länge, bevorzugt 75% und/oder 80%, insbesondere 100% der Lände zwischen der ersten und zweiten Aufnahmeöffnung der Trägereinheit ausgebildet sein.

Dies hat den Vorteil, dass die Abdeckvorrichtung unterschiedlicher Längen verwendet werden können, so dass die mehrere Abdeckvorrichtungen in Erstreckungslängsrichtung hintereinander angebracht werden können und dabei innerhalb der Nutdichtung und der Kabelrohrdichtungen verlaufen. Das führt dazu, dass eine ausreichend hohe Dichtigkeit erhalten bleibt, um die Lichtwellenleitkabel durchblasen zu können, nachdem die Deckeleinheit angebracht wurde. So kann eine qualitativ hochwertige und damit verbundene langlebige Verbindung sichergestellt werden.

In einer bevorzugten Ausführungsform der Erfindung kann die zweite Nut in Längserstreckungsrichtung der Deckeleinheit von der ersten bis zur zweiten Aufnahmeöffnung (213, 214) der Deckeleinheit (120) ausgebildet sein.

Dies hat den Vorteil, dass die Abdeckvorrichtung vollständig von der Deckeleinheit überdeckt ist und somit eine ausreichend hohe Dichtheit erreicht werden kann, um die Lichtwellenleitkabel durchblasen zu können, nachdem die Deckeleinheit angebracht wurde. So kann eine qualitativ hochwertige und damit verbundene langlebige Verbindung sichergestellt werden. Insbesondere kann dadurch sichergestellt werden, dass das Lichtwellenleitkabelrohr im montierten Zustand bündig mit der zweiten Nut abschließt.

In einer bevorzugten Ausführungsform der Erfindung kann die Abdeckvorrichtung wenigstens zweiteilig ausgebildet sein. Dabei sind die einzelnen Teile derAbdeckvorrichtung voneinander lösbar ausgebildet. Des Weiteren kann jeder der Teile der wenigstens zweiteiligen Abdeckvorrichtungjeweils mindestens eins der Verbindungselemente aufweisen. Dabei kann die Trägereinheit die entsprechenden Verbindungsaufnahmeelemente aufweisen.

Dies hat den Vorteil, dass die einzelnen Teile der Abdeckvorrichtung kürzer sind und deshalb eine einfachere Bedienbarkeit ermöglichen. So wird insbesondere ein Quetschen von Lichtwellenleitkabeln verhindert, da diese stückchenweise durch die Teile der Abdeckvorrichtung abgedeckt werden können. Bevorzugt wird, dass die Teile der Abdeckvorrichtung aneinander angrenzend, insbesondere in direkten Kontakt miteinander, auf die Trägereinheit montiert werden. Dadurch wird insbesondere eine hohe Dichtigkeit erreicht, sodass die Lichtwellenleitkabel durchgeblasen werden können, nachdem die Deckeleinheit angebracht wurde. So kann eine qualitativ hochwertige und damit verbundene langlebige Verbindung sichergestellt werden.

Gemäß einem weiteren Aspekt bezieht sich die Erfindung auf ein Verfahren zur Herstellung einer Verbindung zwischen einem Ende eines ersten Lichtwellenleitkabelrohres und einem Ende eines zweiten Lichtwellenleitkabelrohres durch eine Verbindungsvorrichtung gemäß der vorliegenden Erfindung. Das Verfahren umfasst verschiedene Schritte. In einem ersten Schritt erfolgt ein Einführen des Endes des ersten Lichtwellenleitkabelrohres und des Endes des zweiten Lichtwellenleitkabelrohres in eine erste Aufnahmeöffnung und in eine zweite Aufnahmeöffnung einer Trägereinheit der Verbindungsvorrichtung. In einem weiteren Schritt erfolgt das Montieren einer Abdeckvorrichtung auf der Trägereinheit (110) und/oder in der Deckeleinheit (120. In einem weiteren Schritt erfolgt das Montieren einer Deckeleinheit der Verbindungsvorrichtung auf der Trägereinheit.

In einer bevorzugten Ausführungsform der Erfindung umfasst das Verfahren weiterhin das Erstellen einer kraftschlüssigen Verbindung zwischen der Deckeleinheit und der Trägereinheit durch Verschrauben der Deckeleinheit mit der Trägereinheit. Diese kann alternativ zu einer Verschraubung auch durch eine Verklippung oder Verklemmung erfolgen. Ferner ist es auch möglich bei zylindrischen Ausführungsformen Klemmschellen zu verwenden. Schließlich ergibt sich auch eine Möglichkeit der Stoffschlüssigen Verbindung durch Verwendung entsprechender Kleber.

Erfindungsgemäß erfolgt die Durchführung des Verfahrens unter Verwendung einer Vorrichtung wie sie zuvor beschrieben worden ist.

Gemäß einem weiteren Aspekt kann die Erfindung, insbesondere die Verbindungsvorrichtung, zum abdichtenden Verbinden von Lichtwellenleitkabelrohren verwendet werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserung oder Ergänzungen zu der jeweiligen Grundform der vorliegenden Erfindung hinzufügen.

Die vorliegende Erfindung wird nachfolgend anhand der in den schematischen Figuren der Zeichnungen angegebenen Ausführungs-beispiele näher erläutert. Es zeigen dabei:
- Fig. 1: eine erste Ausführungsform der Verbindungsvorrichtung in einer Explosionsdarstellung;
- Fig. 2: eine weitere Ausführungsform der Verbindungsvorrichtung in einer Explosionsdarstellung;
- Fig. 3: eine weitere Ausführungsform der Verbindungsvorrichtung in einer Explosionsdarstellung;
- Fig. 4: eine Ausführungsform der Trägereinheit der Verbindungsvorrichtung in einer Draufsicht; und
- Fig. 5: eine Ausführungsform der Dichtungen der Verbindungsvorrichtung in einer Vorderansicht; und
- Fig. 6: eine weitere Ausführungsform der Verbindungsvorrichtung in einer Explosionsdarstellung mit einer Abdeckvorrichtung; und
- Fig. 7: eine weitere Ausführungsform derTrägereinheit der Verbindungsvorrichtung in einer Draufsicht mit montierter Abdeckvorrichtung; und
- Fig. 8: eine weitere Ausführungsform derTrägereinheit der Verbindungsvorrichtung in einer Draufsicht mit montierter mindestens zweiteiliger Abdeckvorrichtung; und
- Fig. 9: eine Ausführungsform der Verbindungsvorrichtung in einem schematischen Querschnitt mit montierter Abdeckvorrichtung in einer zweiten Nut in der Deckeleinheit; und
- Fig. 10: eine Ausführungsform der Verbindungsvorrichtung in einem schematischen Querschnitt mit einer halb montierter Abdeckvorrichtung in einer zweiten Nut in der Deckeleinheit; und
- Fig. 11: eine Ausführungsform der Verbindungsvorrichtung in einem schematischen Querschnitt mit einer, auf dem Trägerelement montierten, Abdeckvorrichtung
- Fig. 12: eine Ausführungsform der Abdeckvorrichtung in einem schematischen Querschnitt; und
- Fig. 13: eine Ausführungsform der Abdeckvorrichtung mit Verbindungselemente in einem schematischen Querschnitt.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche, und gleich wirkende Elemente, Merkmale und Komponenten ― so-fern nichts anderes ausgeführt ist ― jeweils mit denselben Bezugszeichen versehen.

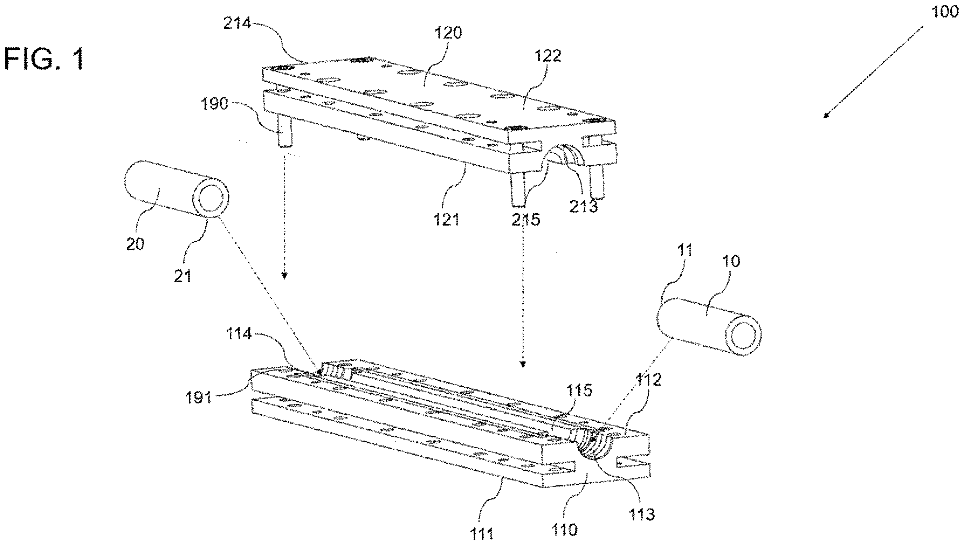

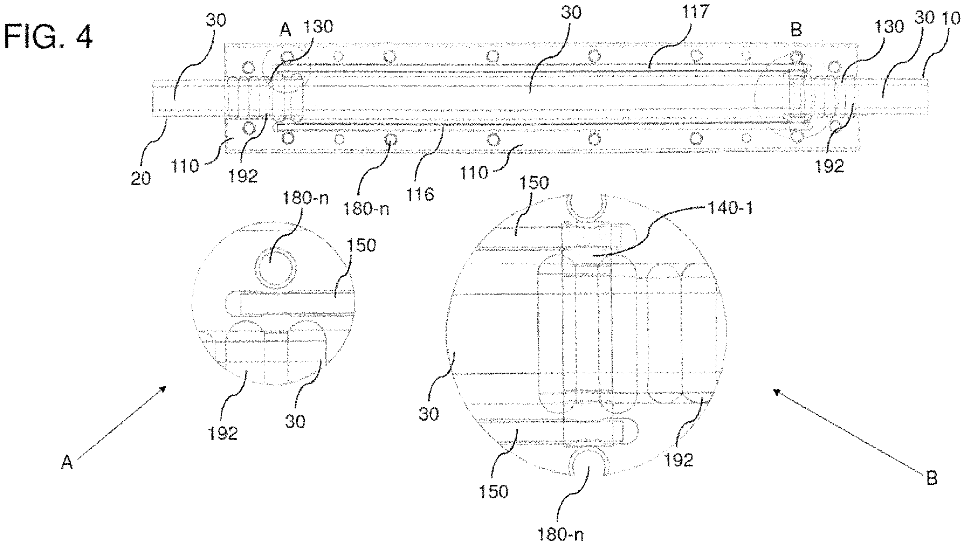

**Fig. 1** zeigt eine Ausführungsform der erfindungsgemäßen Verbindungsvorrichtung in einer Explosionsdarstellung. In **Fig. 1** bezeichnet Bezugszeichen 100 die erfindungsgemäße Verbindungsvorrichtung. Die Verbindungsvorrichtung 100 ist zum Verbinden eines Endes 11 eines ersten Lichtwellenleitkabelrohres 10 mit einem Ende 21 eines zweiten Lichtwellenleitkabelrohres 20 ausgebildet. Insbesondere ist die Verbindungsvorrichtung 100 zum abdichtenden Verbinden eines Endes 11 eines ersten Lichtwellenleitkabelrohres 10 mit einem Ende 21 eines zweiten Lichtwellenleitkabelrohres 20 ausgebildet. Das erste Lichtwellenleitkabelrohr 10 und das zweite Lichtwellenleitkabelrohr 20 sind ausgebildet ein Lichtwellenleitkabel 30 (Glasfaser, vgl. **Fig. 4**) vor äußeren Einflüssen schützend aufzunehmen und zu umschließen. Das erste Lichtwellenleitkabelrohr 10 und das zweite Lichtwellenleitkabelrohr 20 können die zwei Bestandteile eines zusammenhängenden Lichtwellenleitkabelrohres sein, welches aufgrund einer Beschädigung getrennt wurde oder werden musste. Auch kann vorgesehen sein, zwei einzelne und zuvor unabhängige Lichtwellenleitkabelrohre 10, 20 unter Verwendung der erfindungsgemäßen Verbindungsvorrichtung 100 mit einander abdichtend zu verbinden.

Die Verbindungsvorrichtung 100 weist eine Trägereinheit 110 auf. Die Trägereinheit 110 weist eine Unterseite 111 und eine Oberseite 112 auf. Die Trägereinheit 110 ist eine Baugruppe der Verbindungsvorrichtung 100, welche selber weitere Baugruppen oder Einheiten aufweisen kann. Zudem weist die Verbindungsvorrichtung 100 eine Deckeleinheit 120 auf. Die Deckeleinheit 120 weist eine Unterseite 121 und einer Oberseite 122 auf. Die Deckeleinheit 120 ist eine Baugruppe der Verbindungsvorrichtung 100, welche selber weitere Baugruppen oder Einheiten aufweisen kann. Die Trägereinheit 110 und die Deckeleinheit 120 weisen in der in **Fig. 1** dargestellten Ausführungsform die gleiche Form und die gleichen Längserstreckung auf. Die Deckeleinheit 120 kann auf die Trägereinheit 110 aufgesetzt und montiert werden, sodass die Deckeleinheit 120 mit der Trägereinheit 110 eine Einheit ausbilden. Die Deckeleinheit 120 weist wenigsten zwei Führungsbolzen 190 auf. Die Trägereinheit weist dazu zwei in der Lage zu den Führungsbolzen 190 übereinstimmende Führungsbolzenaufnahmen 191 auf. In der in **Fig. 1** dargestellten Ausführungsform weist die Deckeleinheit 120 vier Führungsbolzen 190 auf und die Trägereinheit 110 vier übereinstimmende Führungsbolzenaufnahmen 192 auf. In alternativen Ausführungsformen können weitere Führungsbolzen 190 und Führungsbolzenaufnahmen 191, vorzugsweise in einer geraden Anzahl, vorgesehen sein. Unter Verwendung der Führungsbolzen 190 und Führungsbolzenaufnahmen 191 kann ein Aufsetzen und Montieren der Deckeleinheit 120 auf der Trägereinheit 110 der Verbindungsvorrichtung 100 erfolgen, ohne dass diese verkantet oder eine der beiden Einheiten während der Montage beschädigt werden. Die Pfeile der Fig. 1 stellen die Aufsetzbewegung beim Aufsetzen der Deckeleinheit 120 auf die Trägereinheit 110 dar. Über die Führungsbolzen 190 und Führungsbolzenaufnahmen 191 kann in einer Ausgestaltungder Verbindungsvorrichtung 100 eine Passung hergestellt werden, die einen festen Sitz der Deckeleinheit 120 auf der Trägereinheit 110 herstellt. Die Darstellung der Verbindungsvorrichtung 100 mit Führungsbolzen 190 in der **Fig. 1** schließt nicht die Ausführungsform der Verbindungseinrichtung 100 ohne Führungsbolzen aus. Ebenso kann die Deckeleinheit 120 ohne entsprechende Führungsbolzen 190 vorgesehen sein und auf der Trägereinheit 110 montiert werden.

Die Trägereinheit 110 weist an ihren jeweiligen Stirnenden eine erste Aufnahmeöffnung 113 und eine zweite Aufnahmeöffnung 114 auf. Die Deckeleinheit 120 weist an ihren jeweiligen Stirnenden eine erste Aufnahmeöffnung 213 und eine zweite Aufnahmeöffnung 214 auf. Die jeweiligen ersten Aufnahmeöffnungen 113, 213 und die jeweiligen zweiten Aufnahmeöffnungen 114, 214 sind zur Aufnahme der Enden 11, 21 des ersten Lichtwellenleitkabelrohres 10 und des zweiten Lichtwellenleitkabelrohres 20 ausgebildet. Insbesondere weisen die erste und zweite Aufnahmebereiche die Form des ersten und zweiten Lichtwellenleitkabelrohres 10, 20 auf.

Ferner weist die Trägereinheit 110 auf der Oberseite 112 einer erste Nut 115 auf. Die erste Nut 115 verläuft in Längserstreckungsrichtung der Trägereinheit 110 beginnend von der ersten Aufnahmeöffnung 113 verlaufend bis zur zweiten Aufnahmeöffnung 114. Die erste Nut 115 ist gegenüber der Oberseite 112 der Trägereinheit 110 als eine Vertiefung (Materialaussparung) ausgebildet. Die erste Nut 115 kann eine halbzylindrische Form aufweisen. Zudem weist die Deckeleinheit 120 auf der Unterseite 121 eine weitere Nut 215 auf. Die weitere Nut 215 verläuft in Längserstreckungsrichtung der Deckeleinheit 120 beginnend von der ersten Aufnahmeöffnung 213 verlaufend bis zur zweiten Aufnahmeöffnung 214. Die weitere Nut 215 ist gegenüber der Unterseite 121 der Deckeleinheit 120 als eine Vertiefung (Materialaussparung) ausgebildet. Die weitere Nut kann eine halbzylindrische Form aufweisen.

Die Deckeleinheit 120 ist auf der Trägereinheit 110 montierbar. Im montierten Zustand, das heißt, wenn die Deckeleinheit 120 auf die Trägereinheit 110 aufgesetzt ist, bilden die erste Nut 115 der Trägereinheit 110 und die weitere Nut 215 der Deckeleinheit einen Führungskanal zur Aufnahme für ein Lichtwellenleitkabel 30 aus. Der Führungskanal erstreckt sich in Längserstreckungsrichtung der Deckeleinheit 120 sowie der Trägereinheit 110. Im montierten Zustand bilden die erste Nut 115 und die weitere Nut 215 vorzugsweise den zylindrischen Führungskanal zur Aufnahme des Lichtwellenleitkabels aus. Die in der Fig. 1 dargestellten Pfeile repräsentieren die Aufsetzrichtung der Deckeleinheit 120 auf die Trägereinheit 110 der Verbindungsvorrichtung 100.

Im montierten Zustand bildet der Führungskanal einen spezifischen Innendurchmesser aus. Der spezifische Innendurchmesser ist kleiner als ein ausgebildeter Innendurchmesser der ersten Aufnahmeöffnung 113, 213 und der zweiten Aufnahmeöffnung 114, 214. Durch die vorteilhafte Ausgestaltung entstehen zwischen derVerbindungsvorrichtung 100 und dem ersten und zweiten Lichtwellenleitkabelrohr 10, 20 keine Kanten und/oder Überstände, an denen das Lichtwellenleitkabel 30 beim Einziehen und/oder Einblasen beschädigt werden würde. Insbesondere wird der Übergangsbereich von den Lichtwellenleitkabelrohren 10, 20 zu der Verbindungsvorrichtung 100, welcher der Reparaturstelle der Lichtwellenleitkabelrohre 10, 20 entspricht derart konstant ausgebildet und gehalten, so dass keine Kanten und/oder Überstände entstehen bzw. ausgebildet werden, die zu einer Beschädigung eines Lichtwellenleitkabels 30 (vgl. **Fig. 4****)** beim Einziehen und/oder Einblasen führen würden. Unter konstant ausgebildet ist im Sinne der vorliegenden Erfindung zu verstehen, dass der Innendurchmesser des im montierten Zustand ausgebildeten Führungskanal dem Innendurchmesser des Lichtwellenleitkabelrohres 10, 20 entspricht.

In einer weiteren Ausführungsform weist der Führungskanal, insbesondere der zylindrische Führungskanal einen Innendurchmesser auf, der gleich dem Innendurchmesser des ersten Lichtwellenleitkabelrohres 10 und des zweiten Lichtwellenleitkabelrohres 20 ist. Durch die erfinderische Ausgestaltung werden weiterhin Kanten und/oder Überstände vermieden, so dass beim Einziehen und/oder Einblasen Beschädigungen des Lichtwellenleitkabels 30 vermieden werden.

Die Trägereinheit 110 und die Deckeleinheit 120 der Verbindungsvorrichtung 100, 300, 400 sind aus einem Material ausgebildet, ausgewählt aus der Gruppe umfassend Polyoxymethylen (POM), Acrylnitril-Butadien-Styrol (ABS), Polycarbonate (PC), Polyvinylchlorid (PVC), Kombinationen und dergleichen. Hierbei ist es von besonderem Vorteil wenn die verwendeten Materialien möglichst eine steife und/oder harte Materialeigenschaft aufweisen, um Verwindungen des Baukörpers, insbesondere der Trägereinheit 110 und der Deckeleinheit 120 möglichst zu reduzieren und eine gleichmäßige Kraftübertragung bei der Verbindung der Baugruppen sicher zu stellen.

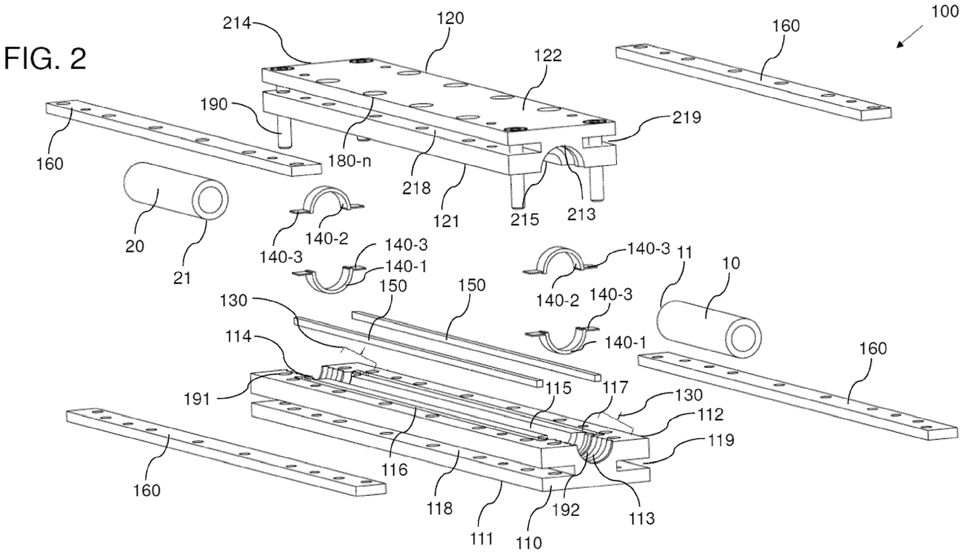

**Fig. 2** zeigt eine weitere Ausführungsform der erfindungsgemäßen Verbindungsvorrichtung in einer weiteren Explosionsdarstellung. In **Fig. 2** sind die Trägereinheit 110 und die Deckeleinheit 120 als Baugruppen der Verbindungsvorrichtung 100 gezeigt. Die Trägereinheit 110 und die Deckeleinheit 120 weisen die Eigenschaften der in der **Fig. 1** dargestellten Verbindungsvorrichtung 100 auf.

Die Trägereinheit 110 der **Fig. 2** weist an ihren jeweiligen Stirnenden eine erste Aufnahmeöffnung 113 und eine zweite Aufnahmeöffnung 114 auf. Die Deckeleinheit 120 weist an ihren jeweiligen Stirnenden eine erste Aufnahmeöffnung 213 und eine zweite Aufnahmeöffnung 214 auf. Die jeweiligen ersten Aufnahmeöffnungen 113, 213 und die jeweiligen zweiten Aufnahmeöffnungen 114, 214 sind zur Aufnahme der Enden 11, 21 des ersten Lichtwellenleitkabelrohres 10 und des zweiten Lichtwellenleitkabelrohres 20 ausgebildet. Insbesondere weisen die ersten und zweiten Aufnahmeöffnungen 113, 114, 213, 214 die Form des ersten und zweiten Lichtwellenleitkabelrohres 10, 20 auf. Zudem weisen die jeweiligen Aufnahmeöffnungen 113, 213, 114, 214 Aufnahmebereiche 130 auf. Die Aufnahmebereiche 130 der Trägereinheit 110 und der Deckeleinheit 120 verlaufen von den jeweiligen Stirnseiten der Trägereinheit 110 und der Deckeleinheit 120 in Richtung der ersten Nut 115 und der weiteren Nut 215 bzw. des im montierten Zustand der Verbindungsvorrichtung 100 ausgebildeten Führungskanals. Die Aufnahmebereiche 130 sind ausgebildet, die Enden 11, 21 des ersten und des zweiten Lichtwellenleitkabelrohres 10, 20 aufzunehmen. Vorzugsweise weisen die Aufnahmebereiche 130 die Form der Lichtwellenleitkabelrohre 10, 20 auf. In einer Ausgestaltung der Aufnahmebereiche 130 weisen diese eine Erstreckungslänge im Bereich von 10 mm bis 100 mm, insbesondere in einem Bereich von 20 mm bis 50 mm, bevorzugt in einem Bereich von 30 mm auf. Über die Aufnahmebereiche 130 werden die Enden 11, 21 der Lichtwellenleitkabelrohre 10, 20 derart in derVerbindungsvorrichtung 100 aufgenommen, so dass die Wahrscheinlichkeit eines unbeabsichtigten Herausrutschens der Lichtwellenleitkabelrohre 10, 20 aus der Verbindungsvorrichtung 100 verringert wird.

Die Aufnahmebereiche 130 sind gemäß einer bevorzugten Ausführungsform der Verbindungsvorrichtung 100 als eine profilierte Einkerbung 192 oder als eine Reibfläche 192 ausgebildet. Die profilierte Einkerbung 192 ist eine fortlaufende wendelartige Einkerbung, die an der Wand des Aufnahmebereiches 130 ausgebildet ist. Die Einkerbung weist Berge und Täler auf, wodurch eine unregelmäßig ausgebildete Oberfläche erzeugt und der Reibungskoeffizient erhöht wird. In einer weiteren Ausgestaltung kann die profilierte Einkerbung 192 als nicht fortlaufende Einkerbung ausgebildet sein, womit aufeinanderfolgende Kerben und Materialerhöhungen ohne Verbindung zueinander vorgesehen sind. Durch die profilierte Einkerbung 192 und die damit ausgebildeten Berge und Täler wird die Reibungszahl zwischen der Aufnahmebereiche 130 und den Enden 11, 21 der Lichtwellenleitkabelrohre 10, 20 erhöht bzw. gesteigert. Das mit den Aufnahmebereichen 130 in Kontakt stehende Material der Lichtwellenleitkabelrohre 10, 20 nimmt bei dem Montieren der Verbindungsvorrichtung 100 die Form der profilierten Einkerbung 192 an und wird in diese aufgenommen. Hieraus ergibt sich eine verbesserte Haftung bzw. Haftreibung, sodass die Lichtwellenleitkabelrohre 10, 20 nur erschwert bzw. begrenzt aus den Aufnahmebereichen 130 der Verbindungsvorrichtung 100 herausrutschen.

In einer bevorzugten Ausführungsform der Erfindung ist der jeweilige Aufnahmebereich 130 als eine Reibfläche 192 ausgebildet. Insbesondere kann die Reibfläche 192 als eine angeraute Reibfläche ausgebildet sein. Die angeraute Reibfläche 192 ist eine Oberfläche bei der das Material der Trägereinheit 110 und der Deckeleinheit 120, insbesondere die Aufnahmebereiche 130 in Berge und Täler als Erhöhung und Vertiefung zerlegt ist und somit die tragende Oberfläche der Aufnahmebereiche 130 in vorteilhafter Weise vermindert wird, um die Reibzahl zu erhöhen. Das Material des Lichtwellenleitkabelrohres 10, 20 wird beim Verklemmen in der Verbindungsvorrichtung 100 an die Form der Reibfläche angepresst und nimmt deren Form an. Somit wird die Reibzahl erhöht und der Sitz des Lichtwellenleitkabelrohres 10, 20 in dem Aufnahmebereich 130 fester bzw. verbessert.

Die in der **Fig. 2** gezeigte Verbindungsvorrichtung 100 weist in den Aufnahmebereichen 130 der Trägereinheit 110 und Deckeleinheit 120 am gegenüberliegenden Ende zu den Aufnahmeöffnungen 113, 114, 213, 214 eine Kabelabrohrdichtung 140-1, 140-2 auf. Somit ist die Kabelrohrabdichtung 140-1,140-2 an dem Übergangsbereich zwischen dem Aufnahmebereich und dem Führungskanal ausgebildet. Die Kabelrohrabdichtung 140-1, 140-2 ist ausgebildet, eine abdichtende Verbindung zwischen einem Ende 11 des ersten Lichtwellenleitkabelrohres 10 und einem Ende 21 des zweiten Lichtwellenleitkabelrohres 21 bereit zu stellen. Insbesondere ist die Kabelrohrabdichtung 140-1,140-2 ausgebildet eine Abdichtung zwischen den Enden 11, 21 des ersten und zweiten Lichtwellenleitkabelrohres 10, 20 und derVerbindungsvorrichtung 100 bereitzustellen. In einer alternative Ausführungsform kann vorgesehen sein, dass nur die Aufnahmebereiche 130 der Trägereinheit 110 eine Kabelrohrabdichtung 140-1 aufweisen. Die Kabelrohrabdichtung 140-1, 140-2 ist aus einem Material ausgebildet, ausgewählt aus einer Gruppe umfassend Elastomere, Fluorkunststoffe, Fasermaterialien, Graphit mit und ohne Metalleinlagen, synthetischen Kautschuk insbesondere Nitril-Butadien-Kautschuk, Hydrierter Nitril-Kautschuk, Ethylen-Propylen-Dien-Kautschuk, Ethylen-Propylen-Terpolymer-Kautschuk, Silikon-Kautschuk, Silicone-Kautschuk, Fluor-Silikon-Kautschuk, Fluorsilikonkautschuk, Fluorsilikon, Fluor-Kautschuk, Fluorkarbon-Kautschuk, Acrylat-Kautschuk, Polyethylacrylat, Perfluor-Kautschuk, Perfluorkautschuk, Perfluor-Kautschuk von DuPont, Polychlorpren-Kautschuk, Chlorkautschuk, Chlorsulfonyl-Polyäthylen-Kautschuk, Polyester-Urethan-Kautschuk, Polyäther-Urethan-Kautschuk, Butyl-Kautschuk, Natur-Kautschuk, Styrol-Butadien-Kautschuk, Santoprene, Styrol-Butadien-Copolymer, Polytetrafluorethylen, expandiertes Tetrafluoroethylene / Tetrafluorethylen, Perfluorethylenpropylen-Copolymer, Perfluoralkoxy-Copolymer, Polyvinylidenfluorid und Kombinationen hiervon.

Die Kabelrohrabdichtung 140-1, 140-2 weisen eine halbkreisförmige Ausgestaltung mit einem Radius auf, so dass die Kabelrohrabdichtung 140-1, 140-2 an der Außenoberfläche des Lichtwellenleitkabelrohres 10, 20 anliegend ist. Zudem weisen die Kabelrohrabdichtungen 140-1, 140-2 zwei als Flügel ausgebildet abstehende Flächen 140-3 auf. Diese abstehenden Flächen 140-3 liegen an der Oberseite der Trägereinheit 110 an. Die in der **Fig. 2** dargestellte Ausführungsform weist sowohl in dem Aufnahmebereich 130 der Trägereinheit 110, als auch in dem Aufnahmebereich 130 der Deckeleinheit 120 eine Kabelrohrabdichtung 140-1, 140-2 auf. Somit liegen an der Oberseite der Trägereinheit 110, als auch an der Unterseite der Deckeleinheit 120 eine Kabelrohrabdichtung 140-1,140-2 an. Hierdurch wird in dieser Ausführungsform das Lichtwellenleitkabelrohr vollumfänglich in seinem Umfang von der Kabelrohrabdichtung umfasst. Somit kann ein Eindringen von Substanzen über die Kontaktflächen zwischen der Trägereinheit 110 und der Deckeleinheit 120 durch Kapillarität vermieden werden. In einer alternativen Ausführungsform kann vorgesehen sein, nur eine Kabelrohrabdichtung 140-1 entweder auf der Trägereinheit 110 oder der Deckeleinheit 120 vorzusehen.

Die in **Fig. 2** gezeigte Verbindungsvorrichtung 100 weist auf der Oberseite 112 der Trägereinheit 110 eine erste Einkerbung 116 und eine zweite Einkerbung 117 auf. Die erste Einkerbung 116 und die zweite Einkerbung 117 verlaufen entlang der ersten Nut 115 der Trägereinheit 110. Die erste Einkerbung 116 und die zweite Einkerbung 117 sind ausgebildet eine Nutdichtung 150 aufzunehmen. Die Nutdichtung 150 ist vorzugsweise als eine Lineardichtung ausgebildet. In einer weiteren Ausführungsform (nicht dargestellt), ist auf der Unterseite 121 der Deckeleinheit 120 eine erste Einkerbung 216 und eine zweite Einkerbung 217 ausgebildet. Die erste Einkerbung 216 und die zweite Einkerbung 217 der Deckeleinheit 120 verlaufen entlang der weiteren Nut 215. Die erste Einkerbung 216 und die zweite Einkerbung 217 der Deckeleinheit weisen vorzugsweise eine weitere Nutdichtung 250 (nicht dargestellt) auf. Die Nutdichtung 150 und die weitere Nutdichtung 250 weisen eine Breite im Bereich von 0,5 bis 20 mm auf.

Die Nutdichtung 150 und die weitere Nutdichtung 250 sind aus einem Material ausgebildet, ausgewählt aus einer Gruppe umfassend Elastomere, Fluorkunststoffe, Fasermaterialien, Graphit mit und ohne Metalleinlagen, synthetischen Kautschuk insbesondere Nitril-Butadien-Kautschuk, Hydrierter Nitril-Kautschuk, Ethylen-Propylen-Dien-Kautschuk, Ethylen-Propylen-Terpolymer-Kautschuk, Silikon-Kautschuk, Silicone-Kautschuk, Fluor-Silikon-Kautschuk, Fluorsilikonkautschuk, Fluorsilikon, Fluor-Kautschuk, Fluorkarbon-Kautschuk, Acrylat-Kautschuk, Polyethylacrylat, Perfluor-Kautschuk, Perfluorkautschuk, Perfluor-Kautschuk von DuPont, Polychlorpren-Kautschuk, Chlorkautschuk, Chlorsulfonyl-Polyäthylen-Kautschuk, Polyester-Urethan-Kautschuk, Polyäther-Urethan-Kautschuk, Butyl-Kautschuk, Natur-Kautschuk, Styrol-Butadien-Kautschuk, Santoprene, Styrol-Butadien-Copolymer, Polytetrafluorethylen, expandiertes Tetrafluoroethylene / Tetrafluorethylen, Perfluorethylenpropylen-Copolymer, Perfluoralkoxy-Copolymer, Polyvinylidenfluorid und Kombinationen hiervon. In vorteilhafter Weise werden durch die Nutdichtung 150 und die weitere Nutdichtung 250 die Oberflächen der Oberseite 112 der Trägereinheit 110 und der Unterseite 121 der Deckeleinheit 120 im montierten Zustand der Verbindungsvorrichtung 100 zueinander dichtend abgeschlossen, so dass keine Substanzen und Flüssigkeiten in die Verbindungsvorrichtung, beispielsweise durch Kapillarwirkung eindringen können. Ferner wird ein Entweichen von Druckluft beim Einblasen des Lichtwellenleitkabels 30 (vgl. **Fig. 4**) reduziert bzw. vermieden, so dass ein Einblasen störungsfrei durchgeführt werden kann.

Die Nutdichtung 150 und die weitere Nutdichtung 250 weisen im Bereich der Kabelrohrabdichtung 140-1,140-2 einen Überlappungsbereich auf. Insbesondere ist vorgesehen das die als Flügel und ausgebildeten abstehenden Flächen 140-3 der Kabelrohrabdichtungen 140-1, 140-2 auf der entsprechenden Seite mit der Nutdichtung 150, und wenn vorgesehen mit der weiteren Nutdichtung 250 überlappen. Im montierten Zustand der Verbindungsvorrichtung 100 bilden die Kabelrohrabdichtung 140-1, 140-2 und die Nutdichtung 150 und wenn vorgesehen die weitere Nutdichtung 250 mit einander unter Krafteinwirkung eine Abdichtung der Verbindungsvorrichtung 100 nach außen aus.

In einer alternativen Ausführungsform sind die Kabelrohrabdichtung 140-1,140-2 und die erste und die zweite Nutdichtung 150, 250 einstückig ausgebildet, vorzugsweise in einem Stück gespritzt. Zum Spritzen der Kabelrohrabdichtung mit erster und zweiter Nutdichtung können im Stand der Technik bekannte Spritzverfahren eingesetzt werden.

Des Weiteren weisen die Trägereinheit 110 und die Deckeleinheit 120 der Verbindungsvorrichtung 100 wenigstens zwei Durchgangsbohrungen 180-n auf. Die Durchgangsbohrungen 180-n sind jeweils seitlich der ersten Nut 115 und der weiteren Nut 215 in Längserstreckungsrichtung dieser angeordnet. Die Durchgangsbohrungen 180-n sind zur Aufnahme von Schauben ausgebildet. In weiteren Ausführungsformen der erfindungsgemäßen Verbindungsvorrichtung 100 sind bevorzugt 3 bis 10 Durchgangsbohrungen 180-n, besonders bevorzugt 6 Durchgangsbohrungen angeordnet vorgesehen. Die Durchgangsbohrungen 180-n können mit gleichen Abständen zueinander und zu den Rändern der Trägereinheit 110 und der Deckeleinheit 120 angeordnet werden.

In einer Ausführungsform derVerbindungseinheit 100 können die Schauben in den Durchgangsbohrungen 180-n über eine Mutter gekontert werden. Über diese Schraubverbindungen wird die Deckeleinheit 120 auf der Trägereinheit 110 montiert gehalten. Beispielsweise können an der Unterseite 111 der Trägereinheit 110 Muttern zur Herstellung einer kraftschlüssigen Verbindung zwischen der Trägereinheit 110 und der Deckeleinheit 120 der Verbindungseinrichtung 100 vorgesehen sind. Weiterhin kann vorgesehen sein, dass die Muttern an der Unterseite 111 der Trägereinheit 110 vertieft in die Trägereinheit 110 eingelassen sind, so dass eine plane Unterseite 111 ausgebildet ist.

In einer alternativen Ausführungsform kann eine Verschraubeinheit 160 zum Verschrauben der Schrauben vorgesehen sein. Zur Aufnahme derVerschraubeinheit 160 weisen die Trägereinheit 110 und die Deckeleinheit 120 der Verbindungsvorrichtung 100 an den beiden Außenseiten in Längserstreckungsrichtung verlaufend eine Langnut 118, 119, 218, 219 auf. In vorteilhafter Weise weist die Verschraubeinheit 160 Gewindebohrungen auf. Die Gewindebohrungen liegen in gleicher Anzahl und mit gleichen Abständen zu den Durchgangsbohrungen vor, so dass durch die Schrauben und die Verschraubeinheit 160 eine kraftschlüssige Verbindung zwischen der Trägereinheit 110 und der Deckeleinheit 120 bereitgestellt werden kann. Die Verschraubeinheit 160 kann in einer Ausgestaltung als eine Gewindeschiene ausgebildet sein, welche das Gegenstück zu den Schrauben in der Durchgangsbohrung 180-n darstellt.

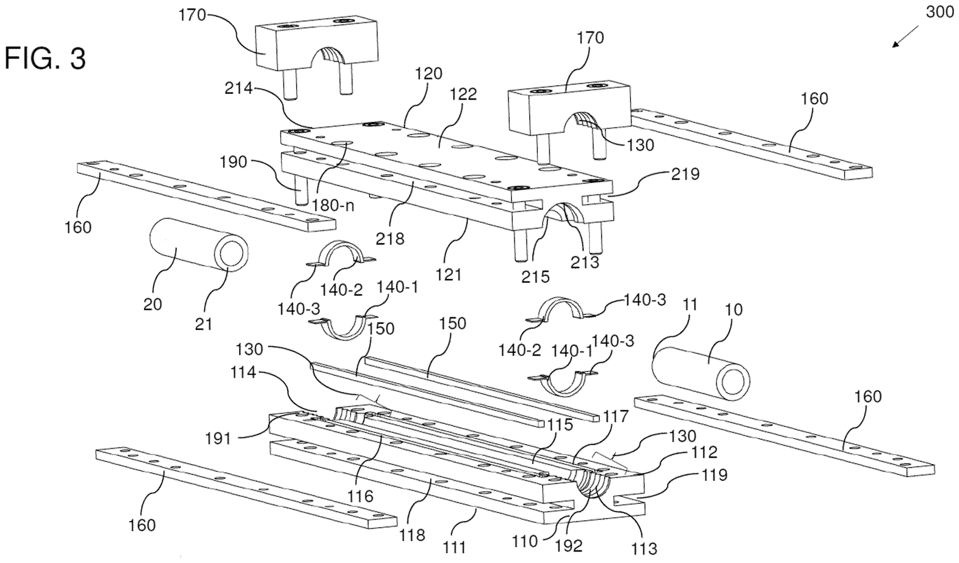

**Fig. 3** zeigt eine weitere Ausführungsform der Verbindungsvorrichtung 300 in einer Explosionsdarstellung. In **Fig. 3** ist eine alternative Ausführungsform der Verbindungsvorrichtung 100 mit Bezug auf die in **Fig. 2** dargestellte Ausführungsform dargestellt. Die Verbindungsvorrichtung 300 umfasst alle Komponenten und Baugruppen der mit der **Fig. 2** gezeigten Verbindungsvorrichtung 100. Die in der **Fig. 3** gezeigte Verbindungsvorrichtung 300 weist die Deckeleinheit 120 mit einer Erstreckungslänge in einem Bereich von 75% bis 90% der Erstreckungslänge der Trägereinheit 110 auf. An der jeweiligen Stirnseite der Deckeleinheit 120 ist eine Klemmeinheit 170 ausgebildet. Die jeweiligen Klemmeinheiten 170 weisen eine Erstreckungslänge von 12,5% bis 5% der Erstreckungslänge der Trägereinheit 110 auf. Die Deckeleinheit 120 der in der **Fig. 3** dargestellten Ausführungsform der Verbindungseinrichtung 300 ist in drei Baugruppen unterteilt.

In dieser vorteilhaften Ausgestaltung ist die Deckeleinheit in drei Baugruppen unterteilt und umfasst zwei als Klemmeinheiten 170 ausgebildete Baugruppen und eine dritte als Hauptbereich ausgebildete Baugruppe. Die Klemmeinheiten 170 und der Hauptbereich weisen entsprechende Durchgangsbohrungen 180-n zur Aufnahme von Schrauben für eine kraftschlüssige Verbindung zwischen der Trägereinheit 110 und der Deckeleinheit 120 auf.

Weiterhin weisen die Klemmeinheiten 170 und der Hauptbereich Führungsbolzen 190 und die Trägereinheit 110 in der Lage zu den Führungsbolzen 190 angeordnete Führungsbolzenaufnahmen 191 auf. In einer weiteren Ausführungsform kann vorgesehen sein, dass die Klemmeinheit 170 zusätzlich zu den Führungsbolzen Schrauben zum Erzeugen einer kraftschlüssigen Verbindung zwischen den Klemmeinheiten 170 und der Trägereinheit 110 aufweisen. Weiterhin ist denkbar, dass nur Schrauben zur Erzeugung einer kraftschlüssigen Verbindung zwischen den Klemmeinheiten 170 und der Trägereinheit 110 vorgesehen sind.

Weiterhin weisen die Klemmeinheiten 170 Aufnahmebereiche 130 auf, die denen der Trägereinheit 110 funktionell und technisch entsprechen. In vorteilhafter Weise können durch diese Ausgestaltung die Enden 11, 21 der Lichtwellenleitkabelrohre 10, 20 in der Verbindungsvorrichtung 300 positionsspezifisch mittels der Klemmeinheiten 170 verklemmt werden, so dass ein verschieben und/oder herausrutschen der Lichtwellenleitkabelrohre 10, 20 vermieden werden kann.

Die Klemmeinheiten 170 weisen zusätzlich die Kabelrohrabdichtung 140-2 zum abdichtenden Verbinden der Enden 11, 21 der Lichtwellenleitkabelrohre 10, 20 auf. Die Kabelrohrabdichtung 140-1, 140-2 und die Nutdichtung 150 und die weitere Nutdichtung 250 können als einstückige Dichtung ausgeführt werden.

**Fig. 4** zeigt eine Ausführungsform der Trägereinheit der Verbindungsvorrichtung 100, 300 in der Draufsicht auf die Trägereinheit ohne montierte Deckeleinheit. In **Fig. 4** bezeichnet Bezugszeichen 110 die Trägereinheit. Die Trägereinheit 110 ist offen mit in den Aufnahmebereichen 130 eingelegten Lichtwellenleitkabelrohren 10, 20 dargestellt. Zudem sind in der **Fig. 4** die Einkerbungen 116, 117 der Trägereinheit 110 zur Aufnahme der Nutdichtung 115 gezeigt. Die Aufnahmebereiche 130 umfassen die profilierte Einkerbung 192 oder Reibfläche 192. Der Aufnahmebereich 130 ist jeweils in zwei Vergrößerungen A, B dargestellt.

In der Vergrößerung A ist der Aufnahmebereich 130 mit der profilierten Einkerbung 192 oder der Reibfläche 192 dargestellt. Weiterhin ist in der Vergrößerung Ader **Fig. 4** die Nutdichtung 150 als Lineardichtung zum seitlichen Abdichten der Verbindungsvorrichtung 100 gezeigt. In Vergrößerung A weist der Aufnahmebereich 130 keine Kabelrohrabdichtung 140-1 auf.

In der Vergrößerung B ist der Aufnahmebereich 130 mit der profilierten Einkerbung 192 oder der Reibfläche 192 dargestellt. Weiterhin ist in der Vergrößerung B der **Fig. 4** die Nutdichtung 150 in Kombination mit der Kabelrohrabdichtung 140-1 gezeigt. Die Nutdichtung 150 und die Kabelrohrabdichtung 140-1 überlappen im Bereich des Aufnahmebereiches 130. Insbesondere überlappen die Nutdichtung 150 und die zwei als Flügel ausgebildet abstehenden Flächen 140-3 der Kabelrohrabdichtung 140-1. In vorteilhafter Weise wird somit eine Abdichtung zwischen dem Lichtwellenleitkabelrohr 10, 20 und der Verbindungsvorrichtung 100, 300 erreicht.

Entsprechend dem Verfahren der vorliegenden Erfindung kann eine beschädigte Stelle eines Lichtwellenleitkabelrohres 10, 20 oder ein beschädigtes Lichtwellenleitkabelrohr 10, 20 derart instandgesetzt werden, so dass ein bereits in dem Lichtwellenleitkabelrohr 10, 20 aufgenommenes Lichtwellenleitkabel weiter verwendet werden kann. Insbesondere muss das bereits in Lichtwellenleitkabelrohr aufgenommene Lichtwellenleitkabel 30 weder entfernt, noch durchtrennt werden, um die erfindungsgemäße Verbindungsvorrichtung 100, 300 zu installieren und eine Beschädigung des Lichtwellenleitkabelrohres instand zu setzen. Somit wird der Aufwand für die Installation und die Reparatur reduziert. Zusätzliche Beschädigungen des Lichtwellenleitkabels 30 und damit verbundene Reduzierungen in der Datenübertragungsrate können vermieden werden.

In der **Fig. 4** ist das Lichtwellenleitkabel 30 in den Lichtwellenleitkabelrohren 10, 20 gestrichelt dargestellt. Die Lichtwellenleitkabelrohre 10, 20 werden durch die Aufnahmebereiche 130 der Verbindungsvorrichtung 100, 300 aufgenommen und das in den Lichtwellenleitkabelrohren 10, 20 bereits eingezogene Lichtwellenleitkabel 30 wird durch die Nut 115 der Trägereinheit 110 bzw. durch den aus der Nut 115 und der Nut 215 der Deckeleinheit 120 ausgebildeten Führungskanal im montierten Zustand aufgenommen. Ein durchtrennen des Lichtwellenleitkabels 30 für die Installation der Verbindungsvorrichtung 100, 300 ist in vorteilhafter Weise nicht erforderlich. Ferner können weitere Lichtwellenleitkabel 30 in die instandgesetzten Verbindungskabelrohre 10, 20 über die Verbindungsvorrichtung 100, 300 eingeblasen und/oder eingezogen werden, ohne dabei beschädigt zu werden.

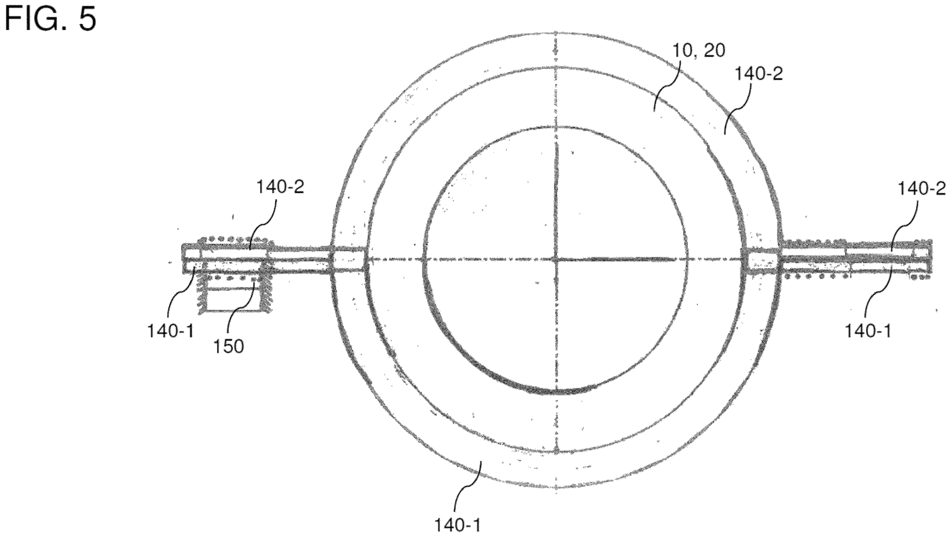

**Fig. 5** zeigt eine Ausführungsform der Dichtungen der erfindungsgemäßen Verbindungsvorrichtung 100, 300 in der Vorderansicht, mit Sicht auf die Stirnseite der Verbindungsvorrichtung 100, 300. In **Fig. 5** ist das Lichtwellenleitkabelrohr 10, 20 in einer Schnittansicht dargestellt. Zudem umfasst die dargestellte Ausführungsform die Nutdichtung 150 und die Kabelrohrabdichtung 140-1,140-2. Durch ein Montieren der Deckeleinheit 120 auf die Trägereinheit 110 üben die beiden Kabelrohrabdichtungen 140-1,140-2 einen Druck auf die Nutdichtung 150 aus. Die Nutdichtung 150 kann sich in X-Richtung ausdehnen und der Druck für die seitliche Abdichtung (Nutdichtung) wird erhöht, womit eine verbesserte Abdichtung erzeugt werden kann. Bei dem Aufsetzen der Deckeleinheit 120 auf die Trägereinheit 110 und dem Einbringen der kraftschlüssigen Verbindung werden die beiden Kabelrohrabdichtungen 140-1, 140-2 nahezu auf null verpresst und die notwendige Dichtigkeit gegen ein Eindringen von Substanzen von außerhalb, sowie gegen das Entweichen von Druckluft erzeugt.

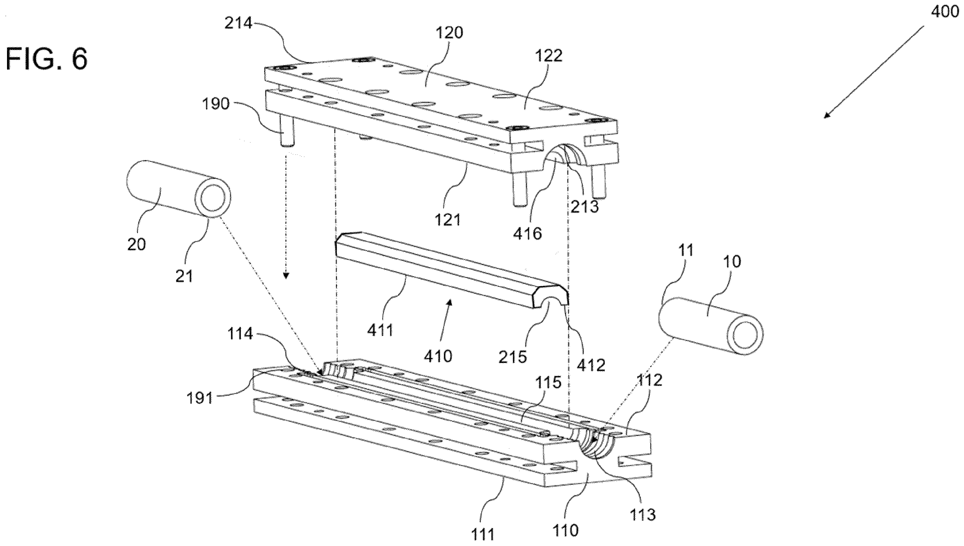

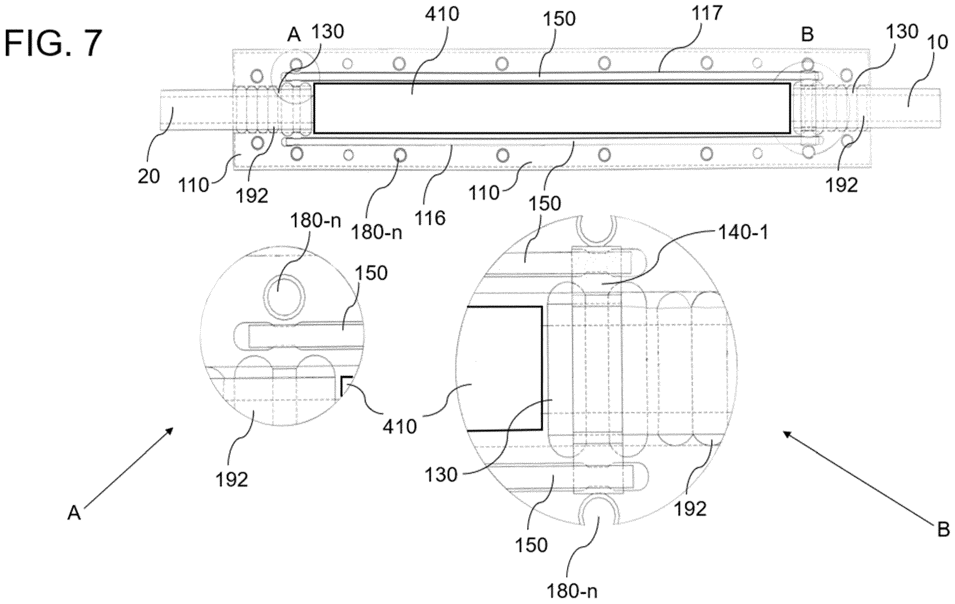

Fig. 6 eine weitere Ausführungsform der Verbindungsvorrichtung 100, 300, 400 in einer Explosionsdarstellung mit einer Abdeckvorrichtung 410. In Fig. 6 ist eine alternative Ausführungsform der Verbindungsvorrichtung 100, 300 mit Bezug auf die in Fig. 1-5 dargestellten Ausführungsformen dargestellt. Die Verbindungsvorrichtung 400 umfasst alle Komponenten und Baugruppen der mit den Fig. 1-5 gezeigten Verbindungsvorrichtung 100, 300. Diese kann auch in den Ausführungsformen der Verbindungsvorrichtung100, 300 wie in den Fig. 1 bis 5 gezeigt verwendet werden und ist nicht auf die Verbindungsvorrichtung 400 wie in Fig. 6 gezeigt beschränkt. Insbesondere kann die Deckeleinheit 120 und Trägereinheit 110, wie in Figur 3 gezeigt mit den Verschraubeinheiten 160, den Kabelrohrabdichtungen 140-1, 140-2, den abstehenden Flächen 140-3 und den Nutdichtungen 150 ausgebildet sein. Auch die Klemmeinheiten 170 aus Figur 3 wurden in Figur 6 nur auf Grund der besseren Übersichtlichkeit weggelassen. Des Weiteren umfasst die Abdeckvorrichtung 410 die weitere Nut 215. Die Deckeleinheit 120 umfasst auf ihrer Unterseite 121 eine zweite Nut 416. Diese verläuft parallel zur der weiteren Nut 215 in Längserstreckungsrichtung innerhalb der Deckeleinheit 120 von der ersten zur zweiten Aufnahmeöffnung 213, 214 der Deckeleinheit 120. Die Abdeckvorrichtung 410 entspricht in Ihrer Länge in Längserstreckungsrichtung der weiteren Nut 215, die sie umfasst. Dies wird auch in der Draufsicht in Fig. 7 gezeigt. Um eine Aufnahme bzw. Durchführung für das Lichtwellenleitkabel 30 auszubilden, bilden im montierten Zustand der Abdeckvorrichtung 410 die weitere Nut 215 der Abdeckvorrichtung 410 und die erste Nut 115 derTrägereinheit 110 zusammen den bereits erwähnten Führungskanal.

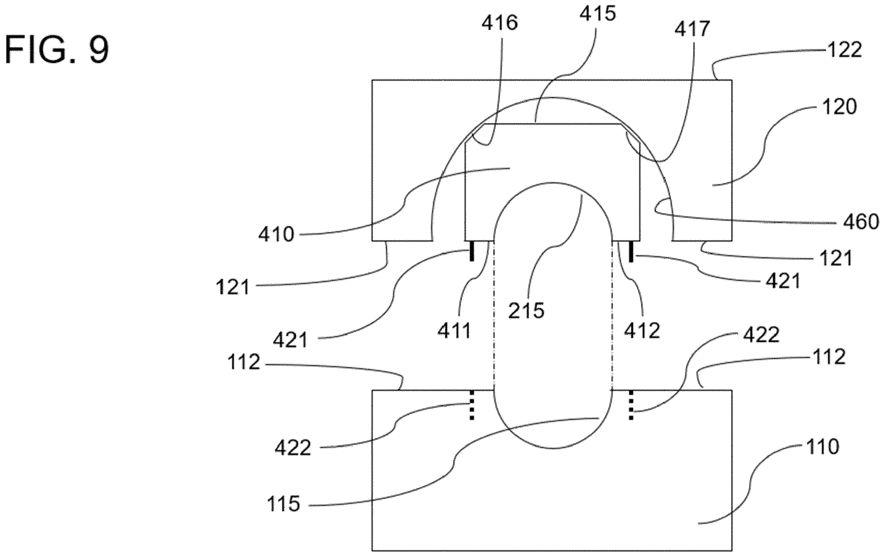

Die Abdeckvorrichtung 410 ist schematisch in Fig. 6 dargestellt und kann ebenfalls die in Fig. 9 bis 11 gezeigten Verbindungselemente 421 sowie Dichtungsstreifen 430 entlang der Unterseite 411, 412 enthalten. Entsprechend enthält die Trägereinheit 110, in der Fig. 6 nicht gezeigt, die Verbindungsaufnahmeelemente 422, die an der entsprechenden Stelle auf der Oberseite 112 den Verbindungselementen 421 gegenüber positioniert sind.

Die Abdeckvorrichtung 410 der Verbindungsvorrichtung 400 ist aus einem Material ausgebildet, ausgewählt aus der Gruppe umfassend Polyoxymethylen (POM), Acrylnitril-Butadien-Styrol (ABS), Polycarbonate (PC), Polyvinylchlorid (PVC), Kombinationen und dergleichen. Hierbei ist es von besonderem Vorteil wenn die verwendeten Materialien möglichst eine steife und/oder harte Materialeigenschaft aufweisen, um Verwindungen des Baukörpers, insbesondere der Abdeckvorrichtung 410 möglichst zu reduzieren und eine gleichmäßige Kraftübertragung bei der Verbindung der Baugruppen sicher zu stellen.

Fig. 7 zeigt eine weitere Ausführungsform der Trägereinheit 110 der Verbindungsvorrichtung 400 in einer Draufsicht mit montierter Abdeckvorrichtung 410. Bis auf die montierte Abdeckvorrichtung 410 entspricht diese Ausführungsform der in Fig. 4 gezeigten Ausführungsformen. Speziell in Fig. 7 ist Abdeckvorrichtung 410 in einer Maximallänge von 100% zwischen den Aufnahmebereichen 130 der ersten und zweiten Aufnahmeöffnungen 130 der Trägereinheit 110 dargestellt. Dabei verlaufen die Aufnahmebereiche 130 der Trägereinheit 110 und der Deckeleinheit 120 von den jeweiligen Stirnseiten der Trägereinheit 110 und der Deckeleinheit 120 in Richtung der ersten Nut 115 und der zweiten Nut 416 bzw. des im montierten Zustand der Verbindungsvorrichtung 400 ausgebildeten Führungskanals.

Die beiden Vergrößerungen A, B entsprechen denen der Ausführungsform aus Fig. 4. Zusätzlich wird die Platzierung derAbdeckvorrichtung 410 im montierten Zustand gezeigt, wobei gezeigt ist, dass die Abdeckvorrichtung 410 bis zum Aufnahmebereich 130 ausgebildet ist. Somit schließt die Abdeckvorrichtung 410, wie gezeigt, bündig mit der ersten Nut 115 und dem Aufnahmebereich 130 ab. Des Weiteren ist zusammen mit der Draufsicht in Fig. 7 gezeigt, dass die Abdeckvorrichtung 410 im montierten Zustand die erste Nut 115 abdeckt, in dem die Unterseite 411, 412 zwischen der ersten Nut 115 und den Einkerbungen 116, 117 (Nutdichtungen 150) auf der Trägereinheit 110 angeordnet ist. Das führt dazu, dass in einem montierten Zustand der Deckeleinheit 120, die Abdeckvorrichtung innerhalb der Nutdichtungen 150 der Deckeleinheit und der Trägereinheit 110 und der Kabelrohrabdichtungen 140-1, 140-2 ist und somit vollständig innerhalb einer umlaufenden Dichtung angeordnet ist.

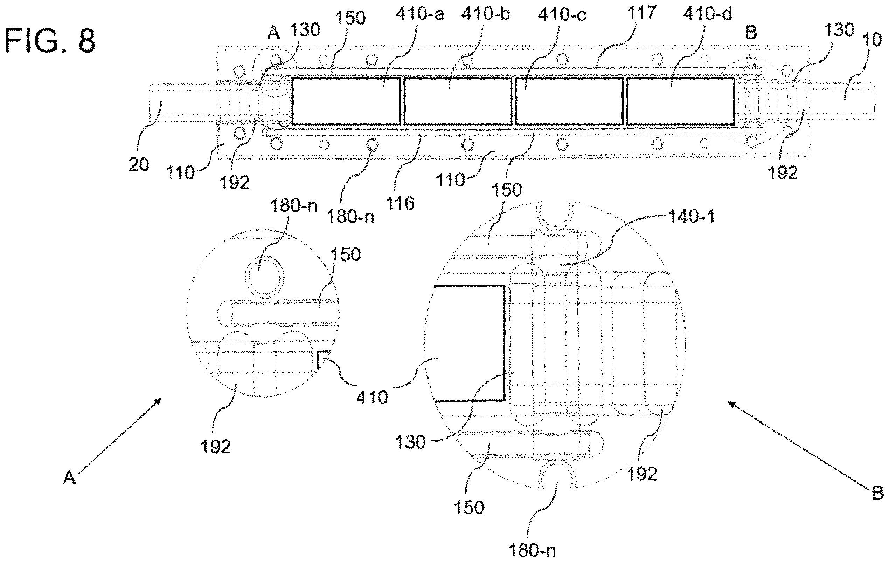

Fig. 8 eine Ausführungsform der Verbindungsvorrichtung 400 in einer Draufsicht mit montierter mindestens zweiteilig ausgebildeter Abdeckvorrichtung 410. Insbesondere ist in Fig. 8 beispielhaft eine Abdeckvorrichtung 410 mit vier Teilen 410-a, 410-b, 410-c, 410-d dargestellt. Diese sind voneinander lösbar und unabhängig voneinander auf der Trägereinheit 110 montierbar. Im Übrigen entspricht diese Ausführungsform, der in Fig. 7, gezeigten Ausführungsform.

Die Fig. 9 bis 11 zeigen schematische Darstellungen der Trägereinheit 110 und der Deckeleinheit 122. Aufgrund der schematischen Darstellung sind die Langnuten 118, 119, 218, 219 sowie wie weitere Details bspw. Führungsbolzen 190, und die Führungsbolzenaufnahmen 191 nicht dargestellt.

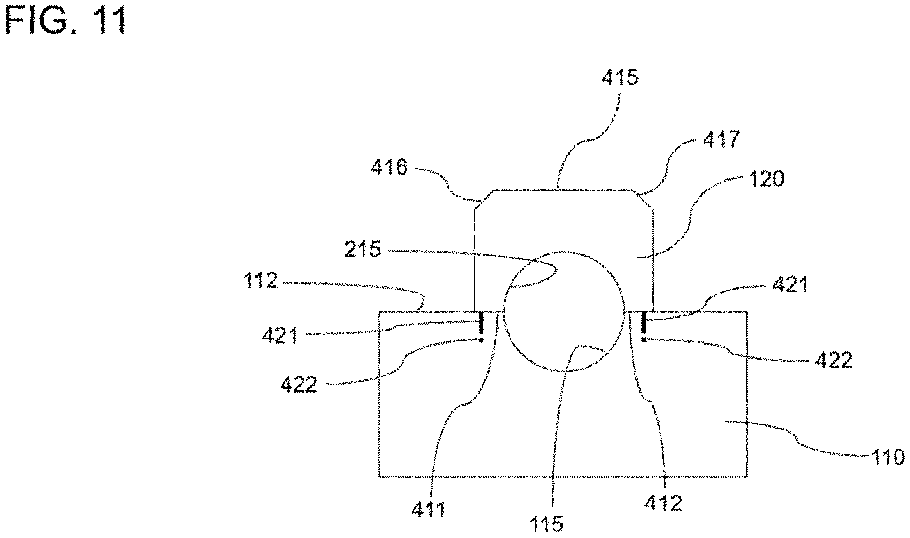

Fig. 9 zeigt eine Ausführungsform der Verbindungsvorrichtung 400 in einem schematischen Querschnitt mit montierter Abdeckvorrichtung 410 in derzweiten Nut 416 in der Deckeleinheit 120. Die zweite Nut 416 ist beispielhaft bogenförmig dargestellt, wobei die zweite Nut 416 so tief ausgebildet ist, dass die Abdeckvorrichtung 410 vollständig in der zweiten Nut 416 aufgenommen wird. Das heißt, wie Figur 9 zeigt, dass im montierten Zustand die Unterseite 121 der Deckeleinheit 120 mit der Unterseite 411, 412 der Abdeckvorrichtung 410 auf einer Linie, auf derselben Höhe, sind. Darüber hinaus hat die Abdeckvorrichtung 410 abgeflachte Kanten 416, 417, die dazu dienen mit der zweiten Nut 416 zu verkanten. Außerdem bildet die Abdeckvorrichtung 410 die Verbindungselemente 421 aus, die an der Unterseite 411, 412 der Abdeckvorrichtung 410 angebracht sind. Dieses können beim Montieren auf der Trägereinheit 110, wie in Fig. 11 gezeigt, in die Verbindungsaufnahmeelemente 422 eingeführt werden. Dort können sie verkanten, so dass eine gewisse Reibhaftung entsteht, die es ermöglicht die Abdeckvorrichtung 410 zunächst fest genug auf der Trägereinheit 110 anzubringen, sodass eine gewisse Andruckkraft durch die Abdeckvorrichtung 410 auf die Trägereinheit 110 entsteht. Trotzdem kann die Abdeckvorrichtung 410 wieder von der Trägereinheit 110 gelöst werden. Die Verbindungselemente 421 sind bevorzugt Stifte und/oder Bolzen und die Verbindungsaufnahmeelemente 422 entsprechende Sacklochbohrungen. Die Sacklochbohrungen können Gewinde und/oder Rillen aufweisen, sodass zwischen den Stiften und Verbindungsaufnahmeelementen 422 eine erhöhte Haftreibung entsteht. besonders gute Außerdem können die Verbindungselemente 421 aus Metall sein oder aus demselben Material wie die Abdeckvorrichtung 410 sein.

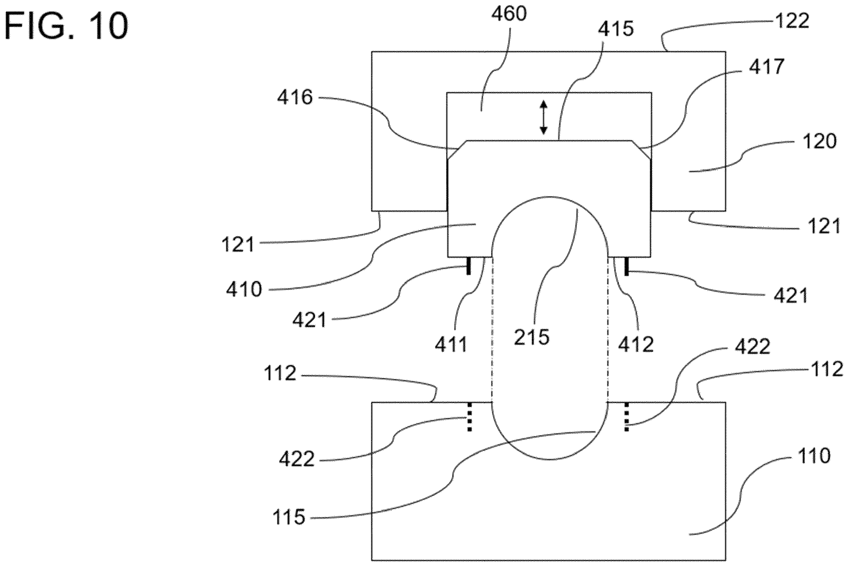

Fig. 10 zeigt eine Ausführungsform der Verbindungsvorrichtung 400 in einem schematischen Querschnitt mit einer halb montierten Abdeckvorrichtung in einer zweiten Nut 416 die in der Deckeleinheit 120 ausgebildet ist. Insbesondere bedeutet der doppelköpfige Pfeil, dass die Abdeckvorrichtung 410 in die zweite Nut 460 einsetzbar ist und dabei mit den Wänden der Nut in Kontakt tritt und eine Haftreibung entsteht. Die zweite Nut 460 ist U-förmig und rechtwinklig ausgebildet, im Gegensatz zu der U-bogenförmigen Ausgestaltung in Fig. 9. Dabei ist in beiden Fällen wichtig, dass in einem montierten Zustand der Deckeleinheit 120 auf der Trägereinheit 110 die Abdeckvorrichtung 410 mit der zweiten Nut 460 verkanten. Dadurch wird sichergestellt, dass der Anpressdruck von der Deckeleinheit 120 auf die Abdeckvorrichtung 410 übertragen wird und so auch zu einem genügend hohen Anpressdruck der Abdeckvorrichtung 410 auf der Trägereinheit 110 führt. So entsteht ein Führungskanal zwischen der weiteren Nut 215 der Abdeckvorrichtung 410 und der ersten Nut 115 der Trägereinheit 110 mit hoher Dichtigkeit.

Fig. 11 zeigt eine Ausführungsform der Verbindungsvorrichtung 400 in einem Querschnitt. Auf dem Trägerelement 110 ist die Abdeckvorrichtung 410 montiert. Die erste Nut 115 in der Trägereinheit 110 bildet mit der weiteren Nut 215, die in der Abdeckvorrichtung 410 ausgebildet ist, den Führungskanal. In diesem montierten Zustand sind die Verbindungselemente 421 in den Verbindungsaufnahmeelementen 422 eingeführt, wodurch über eine Haftreibung sichergestellt ist, dass die Abdeckvorrichtung 410 auf der Trägereinheit 110 in Position gehalten wird. So wird ein Verrutschen der Abdeckvorrichtung 410 auf der Trägereinheit 110 verhindert.

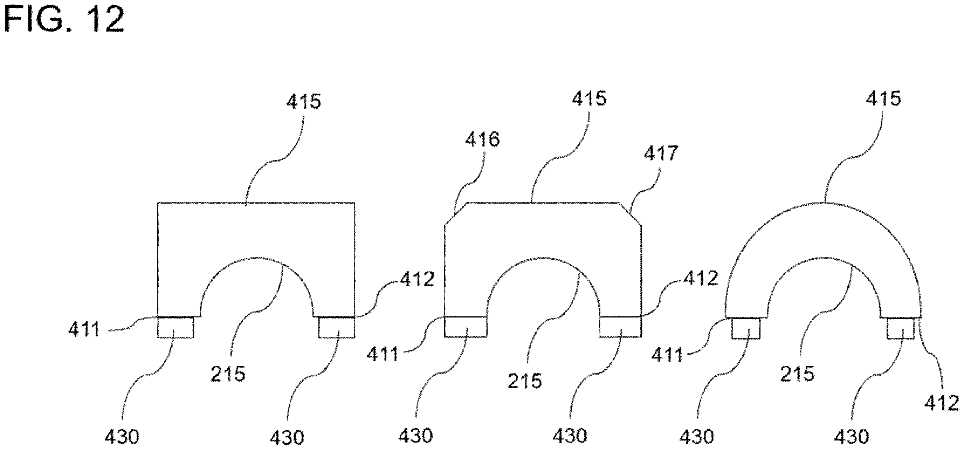

Fig. 12 zeigt Ausführungsformen der Abdeckvorrichtung 410 mit Dichtungsstreifen 430 in einem schematischen Querschnitt. Die Dichtungsstreifen 430 sind auf der Unterseite 411, 412 der Abdeckvorrichtung 410 angebracht, dies kann insbesondere durch eine Klebeverbindung realisiert werden. Die Dichtungsstreifen 430 sind aus demselben Material wie die Nutdichtungen 150 und/oder die Kabelrohrabdichtungen 140-1, 140-2. In einer alternativen Ausführungsform kann der Dichtungsstreifen 430 selbst einen Kleber ausbilden, so dass eine hohe Dichtung des Führungskanals im montierten Zustand und ein sicheres Verbinden der Abdeckvorrichtung 410 mit der Trägereinheit 110 erreicht werden kann. Außerdem verlaufen die Dichtungstreifen 430 entlang der Unterseite 411, 412 in Längserstreckungsrichtung der Abdeckvorrichtung 410 (in Fig. 12, auf Grund der Darstellung des Querschnitts nicht gezeigt) über die gesamte Länge der Abdeckvorrichtung 410. Wie im Querschnitt der Fig. 12 gezeigt, kann der Dichtungsstreifen 430 unterschiedlich breit ausgeführt werden, dabei ist auch die Form (kreisförmiger Querschnitt), Dicke (Höhe) variabel (in Fig. 12 nicht gezeigt), und die Position auf der Unterseite 411, 412 ist ebenso variabel. So kann verhindert werden, dass die Dichtungsstreifen in den Führungskanal hineinragen und die Lichtwellenleiterkabel beim Einblasen stören. Darüber hinaus ist der Vorteil der Dichtungsstreifen 430, dass im montierten Zustand eine hohe Dichtigkeit des Führungskanals erreicht werden kann.

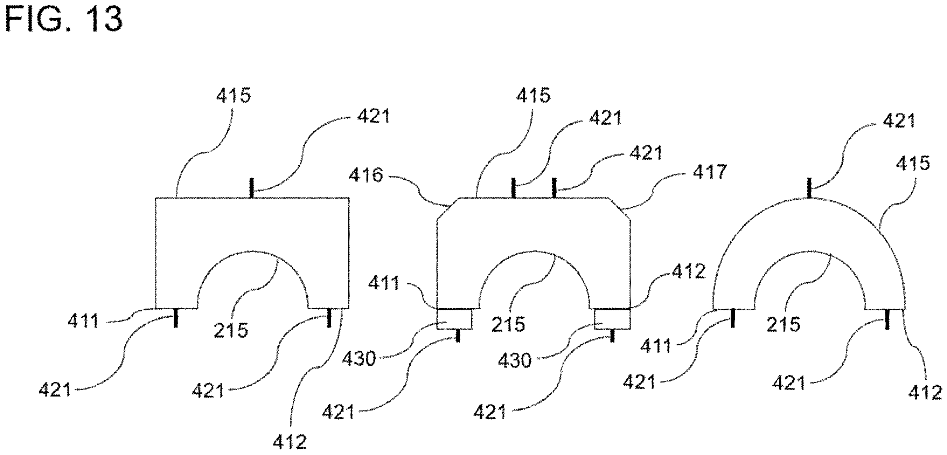

Der Querschnitt der Abdeckvorrichtung 410 kann wie in Fig. 12 und 13 gezeigt variieren. Dabei ist für die Abdeckvorrichtung 410, wie links in Fig. 12 und 13 gezeigt, eine rechtwinklige Form möglich und/oder, wie mittig in Fig. 12 und 13 gezeigt, eine Form mit abgeflachten Kanten und/oder, wie rechts in Fig. 12 und 13 gezeigt, eine bogenartige Form, die auch ein Halbkreis sein kann. Wichtig ist, dass die Abdeckvorrichtung 410 in die zweite Nut 460 der Deckeleinheit 120 wie in Fig. 9 und 11 gezeigt vollständig aufgenommen werden kann, wobei zumindest ein Teil der Oberseiten 415, bspw. die rechtwinkligen Ecken bzw. die abgeflachten Kanten 416, 417 der Abdeckvorrichtungen 410 aus den Fig. 12,13 mit der zweiten Nuten 460 verkanten. Dies führt dazu, dass wenn die Deckeleinheit 120 auf die Trägereinheit 110 gedrückt und/oder verschraubt wird, die Abdeckvorrichtung 410, die mit der Deckeleinheit 120 verkantet ist, ebenfalls auf die Trägerseite 110 gedrückt. Dadurch bilden die erste Nut 115 der Trägereinheit 110 und die weitere Nut 215 der Abdeckvorrichtung den Führungskanal aus und können eine hohe Dichtigkeit des Führungskanals sicherstellen. Das Verkanten der abgeflachten Kanten 416, 417 mit der zweiten Nut 460 ist beispielhaft in Fig. 9 zu sehen.

Fig. 13 zeigt weitere Ausführungsformen der Abdeckvorrichtung 410 mit Dichtungsstreifen 430 und Verbindungselementen 421 in einem schematischen Querschnitt. Dabei werden zusätzlich zur Fig. 12 die Verbindungselemente 421 in Kombinationen mit den Dichtungsstreifen 430 auf der Unterseite 411, 412 der Abdeckvorrichtung 410 gezeigt. Beispielsweise in der mittleren Abdeckungsvorrichtung 410 der Figur 13. Darüber hinaus ist noch gezeigt, dass die Verbindungselemente 421 zusätzlich auf der Oberseite 415 der Abdeckungsvorrichtung 410 angebracht sind. Beispielsweise werden ein und/oder zwei derVerbindungselemente 421 auf den Oberseiten 415 gezeigt. Mehr als zwei Verbindungselemente 421 auf einer Oberseite 415 sind auch möglich. Außerdem ist auch eine verteilte Anordnung entlang der Längserstreckungsrichtung der Abdeckvorrichtung möglich, aber nicht gezeigt in der Fig. 13. Darüber hinaus ist ebenfalls nicht gezeigt, dass in der zweiten Nut 460 an entsprechender Stelle die Verbindungsaufnahmeelemente 422 ausgebildet sind.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserung oder Ergänzungen zu der jeweiligen Grundform der vorliegenden Erfindung hinzufügen.

### Bezugszeichenliste

- 10, 20: Lichtwellenleitkabelrohr
- 30: Lichtwellenleitkabel
- 11, 21: Lichtwellenleitkabelrohrende
- 100, 300, 400: Verbindungsvorrichtung
- 110: Trägereinheit
- 111: Unterseite Trägereinheit
- 112: Oberseite Trägereinheit
- 113, 213: erste Aufnahmeöffnung
- 120: Deckeleinheit
- 121: Unterseite Deckeleinheit
- 122: Oberseite Deckeleinheit
- 114, 214: zweite Aufnahmeöffnung
- 115, 215: Nut
- 130: Aufnahmebereich
- 140-1, 140-2: Kabelrohrabdichtung
- 140-3: abstehende Flächen
- 116, 117: Einkerbung Trägereinheit
- 216, 217: Einkerbung Deckeleinheit
- 150: Nutdichtung
- 160: Verschraubeinheit
- 180-n: Durchgangsbohrung
- 170: Klemmeinheit
- 190: Führungsbolzen
- 191: Führungsbolzenaufnahme
- 192: profilierte Einkerbung, Reibfläche
- 118, 119, 218, 219: Langnut
- 410: Abdeckvorrichtung
- 411, 412: Unterseite der Abdeckvorrichtung
- 415: Oberseite der Abdeckvorrichtung
- 416, 417: abgeflachte Kante der Abdeckvorrichtung
- 421: Verbindungselement
- 422: Verbindungsaufnahmeelement
- 430: Dichtungsstreifen

## Patentansprüche

1. Verbindungsvorrichtung (100, 300, 400) zum Verbinden eines Endes (11) eines ersten Lichtwellenleitkabelrohres (10) mit einem Ende (21) eines zweiten Lichtwellenleitkabelrohres (20), wobei das erste Lichtwellenleitkabelrohr (10) und das zweite Lichtwellenleitkabelrohr (20) ausgebildet sind, ein Lichtwellenleitkabel (30) aufzunehmen, umfassend:
einer Trägereinheit (110) mit einer Unterseite (111) und einer Oberseite (112);
einer Deckeleinheit (120) mit einer Unterseite (121) und einer Oberseite (122); wobei die Trägereinheit (110) und die Deckeleinheit (120) an einem jeweiligen Stirnende eine erste und eine zweite Aufnahmeöffnung (113, 114, 213, 214) ausgebildet zur Aufnahme der Enden (11, 21) des ersten Lichtwellenleitkabelrohres (10) und des zweiten Lichtwellenleitkabelrohres (20) aufweisen, und
die Trägereinheit (110) auf der Oberseite (112) eine erste Nut (115) in Längserstreckungsrichtung der Trägereinheit (110) beginnend von der ersten Aufnahmeöffnung (113) verlaufend bis zur zweiten Aufnahmeöffnung (114) aufweist und die Deckeleinheit (120) auf der Unterseite (121) eine weitere Nut (215) in Längsrstreckungsrichtung der Deckeleinheit (120) beginnend von der ersten Aufnahmeöffnung (213) verlaufend bis zur zweiten Aufnahmeöffnung (214) aufweist, und wobei
die Deckeleinheit (120) auf der Trägereinheit (110) montierbar ist und die erste Nut (115) und die weitere Nut (215) in Längserstreckungsrichtung der Deckeleinheit (120) und der Trägereinheit (110) im montierten Zustand einen Führungskanal zur Aufnahme für das Lichtwellenleitkabel (30) ausbilden,
**dadurch gekennzeichnet, dass**
der Führungskanal einen Innendurchmesser aufweist, der kleiner ist als ein ausgebildeter Innendurchmesser der ersten Aufnahmeöffnung (113, 213) und der zweiten Aufnahmeöffnung (114, 214) im montierten Zustand der Deckeleinheit (120) auf der Trägereinheit (110).

2. Verbindungsvorrichtung (100, 300) nach Anspruch 1, wobei der Innendurchmesser des Führungskanals gleich einem Innendurchmesser des ersten Lichtwellenleitkabelrohres (10) und des zweiten Lichtwellenleitkabelrohres (20) ist.

3. Verbindungsvorrichtung (100, 300) nach einem der vorangegangenen Ansprüche, wobei die jeweiligen Aufnahmeöffnungen (113, 114, 213, 214) Aufnahmebereiche (130) verlaufend von den Stirnseiten der Trägereinheit (110) und der Deckeleinheit (120) zu dem Führungskanal aufweisen.

4. Verbindungsvorrichtung (100, 300) nach einem der vorangegangenen Ansprüche, wobei der Aufnahmebereich (130) am gegenüberliegenden Ende zur Aufnahmeöffnung (113,114, 213, 214) eine Kabelrohrabdichtung (140-1,140-2) zum abdichtenden Verbinden des Endes (11) eines ersten Lichtwellenleitkabelrohres (10) mit dem Ende (21) eines zweiten Lichtwellenleitkabelrohres (20), aufweist.

5. Verbindungsvorrichtung (100, 300) nach einem der vorangegangenen Ansprüche, wobei auf der Oberseite (112) der Trägereinheit (110) eine erste und eine zweite Einkerbung (116, 117) verlaufend entlang der ersten Nut (115) ausgebildet sind und die erste und die zweite Einkerbung (116, 117) vorzugsweise eine erste Nutdichtung (150) aufweisen, und wobei die Nutdichtung (150) eine Breite im Bereich von 0,5 mm bis 20 mm aufweist.

6. Verbindungsvorrichtung (100, 300) nach einem der vorangegangenen Ansprüche, wobei auf der Unterseite (121) der Deckeleinheit (120) eine erste und eine zweite Einkerbung (216, 217) verlaufend entlang der weiteren Nut (215) ausgebildet sind und die erste und die zweite Einkerbung (216, 217) vorzugsweise eine weitere Nutdichtung (250) aufweisen, und wobei die weitere Nutdichtung (250) eine Breite im Bereich von 0,5 mm bis 20 mm aufweist.

7. Verbindungsvorrichtung (100, 300) nach einem der Ansprüche 6 und 7, wobei die Kabelrohrabdichtung (140-1, 140-2) und die erste und die weitere Nutdichtung (150, 250) in einem Stück ausgebildet, vorzugsweise in einem Stück gespritzt sind.

8. Verbindungsvorrichtung (100, 300) nach einem der vorangegangenen Ansprüche, wobei die Trägereinheit (110) und die Deckeleinheit (120) wenigstens zwei Durchgangsbohrungen (180-n) jeweils seitlich der ersten Nut (115) und der weiteren Nut (215) in Längserstreckungsrichtung angeordnet aufweisen, bevorzugt 3 bis 10 Durchgangsbohrungen (180-n), besonders bevorzugt 6 Durchgangsbohrungen (180-n) angeordnet aufweisen.

9. Verbindungsvorrichtung (100, 300) nach Anspruch 8, wobei die Trägereinheit (110) und die Deckeleinheit (120) an der jeweiligen Außenseite in Längserstreckungsrichtung eine Langnut (118, 119, 218, 219) aufweisen, ausgebildet, um eine Verschraubeinheit (160) mit Gewindebohrungen zum Sichern der Schrauben aufzunehmen.

10. Verbindungsvorrichtung (100, 300) nach einem der vorangegangenen Ansprüche, wobei die Trägereinheit (110) und die Deckeleinheit (120) aus einem Material ausgebildet sind, ausgewählt aus einer Gruppe umfassend Polyoxymethylen, Acrylnitril-Butadien-Styrol, Polycarbonate, Polyvinylchlorid und Kombinationen hiervon.

11. Verbindungsvorrichtung (300) nach einem der vorangegangenen Ansprüche, wobei die Deckeleinheit (120) eine Erstreckungslänge in einem Bereich von 75 bis 90% der Erstreckungslänger der Trägereinheit (110) aufweist und an der jeweiligen Stirnseite der Deckeleinheit (120) eine Klemmeinheit (170) vorgesehen ist, mit einer Erstreckungslänge von 12,5 bis 5% der Erstreckungslänge der Trägereinheit (110).

12. Verbindungsvorrichtung (100, 300, 400) nach einem der vorherigen Ansprüche, **dadurch gekennzeichnet, dass** die Abdeckvorrichtung (410) mindestens ein Verbindungselement (421) zum Befestigen an der Trägereinheit (110) aufweist, und wobei die Trägereinheit (110) mindestens ein zum Verbindungselement (421) gegenteilig ausgebildetes Verbindungsaufnahmeelement (422) jeweils seitlich der ersten Nut (115) aufweist, insbesondere zwischen der Nutdichtung (150) und der ersten Nut (115) der Trägereinheit (110).

13. Verbindungsvorrichtung (100, 300, 400) nach einem der vorangegangenen Ansprüche, **dadurch gekennzeichnet, dass** die Abdeckvorrichtung (410) in Längserstreckungsrichtung der Trägereinheit (110) mindestens 20% einer Länge zwischen der ersten und zweiten Aufnahmeöffnung (113, 114) der Trägereinheit (110) ausgebildet ist, bevorzugt 50%, weiter bevorzugt 75%, weiter bevorzugt 80%, insbesondere 100%.

14. Verbindungsvorrichtung (100,300,400) nach einem der vorangegangenen Ansprüche, **dadurch gekennzeichnet, dass** die Abdeckvorrichtung (410) wenigsten zweiteilig voneinander lösbar ausgebildet ist, und wobei jeder Teil (410-a, 410-b, 410-c, 410-d) der wenigsten zweiteilig ausgebildeten Abdeckvorrichtung (410) jeweils mindestens ein Verbindungselemente (421) und die Trägereinheit (110) die entsprechenden Verbindungsaufnahmeelemente (422) aufweist.

15. Verfahren zur Herstellung einer Verbindung zwischen einem Ende (11) eines ersten Lichtwellenleitkabelrohres (10) und einem Ende (21) eines zweiten Lichtwellenleitkabelrohres (20) durch eine Verbindungsvorrichtung (100, 300) nach einem der vorstehenden Patentansprüche mit den Schritten:
Einführen des Endes (11) des ersten Lichtwellenleitkabelrohres (10) und des Endes (21) des zweiten Lichtwellenleitkabelrohres (20) in eine erste Aufnahmeöffnung (113) und eine zweite Aufnahmeöffnung (114) einer Trägereinheit (110) derVerbindungsvorrichtung, und
Montieren einer Abdeckvorrichtung (410) auf der Trägereinheit (110) und/oder in der Deckeleinheit (120), und Montieren einer Deckeleinheit (120) der Verbindungsvorrichtung auf der Trägereinheit (110).

16. Verfahren nach dem vorangehenden Verfahrensanspruch, wobei das Verfahren weiterhin umfasst:
Erstellen einer kraftschlüssigen Verbindung zwischen der Deckeleinheit (120) und der Trägereinheit (110) durch Verschrauben der Deckeleinheit (120) und der Trägereinheit (110).

17. Verwendung derVerbindungsvorrichtung (100, 300) nach einem der vorangegangenen Ansprüche 1 bis 14 zum abdichtenden Verbinden von Lichtwellenleitkabelrohren (10, 20) und/oder zum Durchführen eines Verfahrens gemäß einem der Ansprüche 15 oder 16.
